# EUROPEAN PATENT APPLICATION

(11) **EP 4 006 536 A1**
(43) Date of publication of application: **01.06.2022**
(21) Application number: 20210257.0
(22) Date of filing: 27.11.2020
(51) Int. Cl.: G01N 27/447

(54) **ELECTROPHORESIS ASSEMBLY AND METHODS**

(71) Applicant: Jacobsen, Simo Abdessamad Baallal, 2100 Copenhagen Ø (DK)
(72) Inventor: Jacobsen, Simo Abdessamad Baallal, 2100 Copenhagen Ø (DK)
(74) Representative: Høiberg P/S

(57) **Abstract**

The present disclosure relates to an electrophoresis assembly comprising two or more frames configured for holding at least one inner frame, which in turn is configured for holding at least one separation matrix such as a gel. The assembly has a dynamic configuration and can adopt a closed configuration, in which it matches an SBS format and/or an SLAS standard, and an open configuration allowing optical monitoring of electrophoresis. Methods of performing electrophoresis and electroblotting taking advantage of said electrophoresis assembly are also disclosed. The methods can be performed in bufferless environment.

## Description

### Technical field

The present disclosure relates to an electrophoresis assembly comprising two or more frames configured for holding at least one inner frame, which in turn is configured for holding at least one separation matrix such as a gel. The assembly has a dynamic configuration and can adopt a closed configuration, in which it matches an SBS format and/or an SLAS standard, and an open configuration allowing optical monitoring of electrophoresis. Methods of performing electrophoresis and electroblotting taking advantage of said electrophoresis assembly are also disclosed. The methods can be performed in bufferless environment.

### Background

The constant search for new biopharmaceutical drugs against rising incidence of cancer, infectious diseases and pandemics, rising genetic disorders, as well as the ever increasing interest for e.g. genomics, metabolomics and proteomics, growing awareness about the benefits of cell culture-based vaccines, increasing interest on personalised medicine and in sustainable microbial cell factories, has for several years driven the growth of electrophoresis market. This is further illustrated by the increasing demands for electrophoresis assemblies and methods required to analyse e.g. PCR outputs for diagnosis purposes and protein or antibody analyses observed in connection with the COVID-19 pandemic.

Biological experimentation, in particular in the field of molecular biology, often requires separation of molecules, in particular macromolecules such as nucleic acid molecules, proteins, amino acids or carbohydrates, for analytical purposes. A common separation procedure involves electrophoresis, where molecules are separated by charge and/or size via mobility through a separating matrix, for example a gel, in the presence of an electrical field. The separated molecules can then be recovered from the separation matrix. Electrophoresis can be followed by electroblotting, such as Western blotting, Northern blotting or Southern blotting, where the separated molecules are transferred to a suitable membrane for further analysis.

Gel separating matrices are typically made by pouring a liquid phase into a mold and letting the matrices solidify. In slab gel electrophoresis, outcroppings in plastic material form combs embedded in the top of the separating matrix. These allow the formation of sample loading wells when the combs are removed after solidification of the matrix. In order to separate the molecules, the gel matrix is placed in appropriate electrophoresis buffers, and an electrical field is generated.

The loading of samples suspected of containing molecules which it is desirable to separate and extract into the combs is a time consuming task, which it is difficult to perform in a high throughput manner. To prevent samples from mixing with the buffers used for electrophoresis, dense solutions are often added to the samples prior to loading into the wells. At the same time, it can be difficult to monitor migration of the molecules of interest in the separation matrix in real time.

After loading of the samples, an electrical field is generated by electrodes in electrical contact with the separation matrix; this may involve buffer as is known in the art, which facilitates the electrical contact. The field allows charged molecules to migrate towards the electrode of opposite charge.

The migration distances for the separated molecular species depend on their relative mobility through the separation matrix. Mobility of each species depends on hydrodynamic size and molecular charge. Nucleic acid molecules typically migrate towards the anode. Proteins are often electrophoresed under conditions where each protein is complexed with a detergent or other material that imparts a negative charge to proteins in the sample. The detergent causes most or all of the proteins to migrate in the same direction (towards the electrophoresis anode). Samples may be stained prior to, during, or after a separation run to visualize the nucleic acids or proteins within the gel. The location of the various components in the gel is determined using ultraviolet light absorbance, autoradiography, fluorescence, chemiluminescence, or any other well-known means of detection. To determine the molecular weight and relative concentration of unknown nucleic acids or proteins, the band positions and intensities are typically compared to known molecular standards.

Blotting is a process used to transfer molecules from an electrophoresis matrix to a membrane for further analysis, such as Southern, Northern, Western or Eastern blotting. Traditionally the separation matrix containing the electrophoresed biological material is removed from the electrophoresis apparatus and placed in a blotting sandwich. The blotting sandwich generally consists of buffer saturated sponges and paper pads; a gel containing the separated biologicals; a suitable transfer membrane that is in intimate contact with the separating matrix; and another layer of buffer saturated paper pads and sponges. In electroblotting, electrotransfer electrodes and buffer may provide an electrical field to move the molecules out of the separating matrix and into the membrane.

It is difficult to perform electrophoresis in a high-throughput manner and to monitor electrophoresis in real time. Methods and devices are needed to perform electrophoresis in a high-throughput manner, which also allow real time monitoring.

### Summary

Herein is provided electrophoresis assembly (1), comprising two or more frames (2), each frame having an opening (18) in an upper end and each frame being configured for holding at least one inner frame (3),
wherein the inner frame is configured for holding at least one separation matrix such as a gel (4), and wherein the inner frame comprises:
- an inner chamber (5) configured for receiving the separation matrix, said inner chamber being defined by lateral walls allowing optical access to the inner part of the inner chamber, by an upper wall (27) in an upper end of the inner chamber, and by a lower wall (39) and optionally a supporting layer (11) resting on said lower wall,
- a buffer chamber (6) configured for receiving a buffer solution, said buffer chamber comprising at least an upper compartment (7) located at an upper end of the inner chamber and a lower compartment (8) located at a lower end of the inner chamber, and optionally further comprising a lateral compartment (9) in fluid communication with the upper compartment and the lower compartment,
- an upper wall (26) comprising a second plurality of openings (13, 13'),
- a lower wall (34) comprising a third plurality of openings (31, 31'),
- a set of electrodes consisting of one or more first electrodes (29) and one or more second electrodes (29') and optionally one or more third electrodes (29"), or means to connect (28) to a set of electrodes consisting of one or more first electrodes and one or more second electrodes;
   wherein the upper wall (27) of the inner chamber comprises a first plurality of openings (10, 10') being defined by a lateral wall which protrudes in the upper compartment and optionally in the inner chamber, and wherein:
   a) each frame comprises a hinge or an internal slidable connection, wherein the two or more frames are pivotably hinged to one another via said hinge or wherein the two or more frames are connected to one another via said internal slidable connection, and/or
   b) the assembly comprises an external slidable connection (16), wherein the two or more frames are releasably connected to one another via said external slidable connection,
   such that in a first configuration the two or more frames abut each other in a longitudinal direction, and in a second configuration the two or more frames do not abut each other in a longitudinal direction while still connected to one another via said hinge or internal slidable connection or via said external slidable connection,
   and wherein said first and second plurality of openings are arranged to match each other and to match an SBS format and/or an SLAS standard at least when the assembly is in the first configuration.

Herein is also provided a method for performing electrophoresis, comprising the steps of:
i) providing an electrophoresis assembly (1), comprising two or more frames (2), each frame having an opening (18) in an upper end and each frame being configured for holding at least one inner frame (3),
   wherein the inner frame is configured for holding at least one separation matrix such as a gel (4), and wherein the inner frame comprises:
   - an inner chamber (5) configured for receiving the separation matrix, said inner chamber being defined by lateral walls allowing optical access to the inner part of the inner chamber, by an upper wall (27) in an upper end of the inner chamber, and by a lower wall (39) and optionally a supporting layer (11) resting on said lower wall,
   - a buffer chamber (6) configured for receiving a buffer solution, said buffer chamber comprising at least an upper compartment (7) located at an upper end of the inner chamber and a lower compartment (8) located at a lower end of the inner chamber, and optionally further comprising a lateral compartment (9) in fluid communication with the upper compartment and the lower compartment,
   - an upper wall (26) comprising a second plurality of openings (13, 13'),
   - a lower wall (34) comprising a third plurality of openings (31, 31'),
   - a set of electrodes consisting of one or more first electrodes (29) and one or more second electrodes (29') and optionally one or more third electrodes (29"), or means to connect (28) to a set of electrodes consisting of one or more first electrodes and one or more second electrodes;
      wherein the upper wall (27) of the inner chamber comprises a first plurality of openings (10, 10') being defined by a lateral wall which protrudes in the upper compartment and optionally in the inner chamber, and wherein:
      a) each frame comprises a hinge or an internal slidable connection, wherein the two or more frames are pivotably hinged to one another via said hinge or wherein the two or more frames are connected to one another via said internal slidable connection, and/or
      b) the assembly comprises a external slidable connection (16), wherein the two or more frames are releasably connected to one another via said external slidable connection,
      such that in a first configuration the two or more frames abut each other in a longitudinal direction, and in a second configuration the two or more frames do not abut each other in a longitudinal direction while still connected to one another via said hinge or internal slidable connection or via said external slidable connection,
      and wherein said first and second plurality of openings are arranged to match each other and to match an SBS format and/or an SLAS standard at least when the assembly is in the first configuration,
      wherein at least one separation matrix is inserted in the inner frames, and wherein a buffer solution is introduced in the buffer chamber,
ii) arranging the electrophoresis assembly in a first configuration wherein the two or more frames abut each other in a longitudinal direction;
iii) loading a first plurality of samples comprising molecules of interest into the first plurality of openings;
iv) optionally, applying a current between the one or more first electrodes and the one or more second electrodes for a duration sufficient to allow the samples of molecules to enter the separation matrix, and further optionally loading a second plurality of samples comprising molecules of interest into the third plurality of openings;
v) applying a current between the one or more first electrodes and the one or more second electrodes, whereby migration of the samples through the separation matrix is enabled;
vi) arranging the electrophoresis assembly in a second configuration wherein the two or more frames no longer abut each other in a longitudinal direction, so as to enable optical access to the separation matrix from a lateral side of the frame; and
vii) monitoring migration of the samples through the separation matrix via optical detection means (40);
wherein steps iii) to vi) can be performed in any order,
preferably wherein the electrophoresis assembly is according to any one of the preceding claims.

Herein is also provided a method for performing electroblotting, comprising the steps of:
i) performing the method of electrophoresis as disclosed herein,
ii) contacting the separation matrix (4) comprising molecules of interest with an electroblotting membrane, and
iii) transferring the molecules of interest from the separation matrix to the electroblotting membrane by applying an electrical field having a direction perpendicular to the direction of the separation matrix and of the electroblotting membrane,
   optionally further comprising, after step i) or during step ii), the step of placing an electroblotting membrane on one lateral side of the separation matrix, placing a first electrode plate on the other lateral side of the separation matrix, thereby covering at least a portion of said lateral side of the separation matrix, and placing a second electrode plate on the other side of the electroblotting membrane, thereby covering at least a portion of said lateral side of the electroblotting membrane, wherein the first electrode plate and the second electrode plate have opposite charges, and wherein the second electrode plate has a charge opposite to the charge of the molecules of interest to be transferred, thereby generating an electrical field in a direction essentially perpendicular to the direction of the separation matrix and of the electroblotting membrane, thereby enabling transfer of the molecules of interest from the separation matrix to the electroblotting membrane.

Also provided herein is the use of the electrophoresis assembly disclosed herein in a method for performing electrophoresis or in a method for performing electroblotting as disclosed herein.

### Description of Drawings

**Figure 1** shows an exploded view of an embodiment of an inner frame (3) which can be used in the electrophoresis assembly of the present disclosure.
**Figure 2** shows the inner frame of Figure 1 ready to be inserted in a frame.
**Figure 3** shows an embodiment of a frame for holding an inner frame, in exploded view.
**Figure 4** shows the frame of figure 3 in which an inner frame has been inserted.
**Figure 5** shows an embodiment of an assembled frame holding an inner frame.
**Figure 6** shows another embodiment of an assembled frame holding an inner frame and a sample reservoir.
**Figure 7** shows another embodiment of a frame and inner frame in exploded view.
**Figure 8** shows the frame and inner frame of Figure 7.
**Figure 9** shows another embodiment of a frame and inner frame with a sample reservoir.
**Figure 10** shows the frame and inner frame of Figure 9 in exploded view.
**Figure 11** shows another embodiment of a frame and inner frame, with a sample reservoir.
**Figure 12** shows an embodiment of an electrophoresis assembly of the present disclosure, here in the first configuration.
**Figure 13** shows a detail of the embodiment of Figure 12.
**Figure 14** shows the electrophoresis of Figure 12 during electrophoresis, with continuous monitoring of migration.
**Figure 15** shows a partial view of the electrophoresis assembly of Figure 12.
**Figure 16** shows another embodiment of the electrophoresis assembly of the present disclosure, here in the first configuration.
**Figure 17** shows the embodiment of Figure 16 during electrophoresis, with continuous monitoring of migration.
**Figure 18** shows an inner chamber configured to hold two separation matrices.
**Figure 19** shows a top view of the inner chamber of Figure 18, when the cassette is flanked by electroblotting membranes.
**Figure 20** illustrates how the inner frame of Figure 18 can be used to easily collect molecules of interest from the separation matrix.

### Detailed description

The present electrophoresis assemblies are particularly useful for performing high-throughput electrophoresis in a convenient, time-saving and labour-saving manner. They can be used to perform electrophoresis in a bufferless environment, where the only required buffer is supplied within each respective inner frame. The electrophoresis assemblies of the present disclosure comprise at least two frames (2), each of which is configured for holding at least one inner frame (3) which is configured for holding at least one separation matrix (4) such as a gel or a liquid separation matrix. The electrophoresis assembly is dynamic, and can adopt two main configurations. In a first configuration, which is a "closed" configuration, the frames all abut each other, and their layout matches an SBS format and/or an SLAS standard, thus enabling the use of multichannel liquid handlers, for example automated, multichannel liquid handlers, thereby facilitating introduction of samples on which electrophoresis and optionally electroblotting is to be performed. The frames are connected to one another via a hinge or an internal slidable connection, or via an external slidable connection (16) comprised within the assembly. In a second configuration, which is an "open" configuration, optical access to each frame can be established individually to allow real time monitoring of electrophoretic migration within the frame. In the second configuration, the electrophoresis assembly is at least partly open or unfolded, i.e. the frames do not all abut each other, and optical access to at least one frame is possible. This dynamic arrangement thus allows minimal footprint of the assembly at least in the first configuration. The electrophoresis assembly can also adopt any intermediate configuration between the first configuration and the second configuration.

### Electrophoresis assembly

Herein is thus provided an electrophoresis assembly (1), comprising two or more frames (2), each frame having an opening (18) in an upper end and each frame being configured for holding at least one inner frame (3),
wherein the inner frame is configured for holding at least one separation matrix such as a gel (4), and wherein the inner frame comprises:
- an inner chamber (5) configured for receiving the separation matrix, said inner chamber being defined by lateral walls allowing optical access to the inner part of the inner chamber, by an upper wall (27) in an upper end of the inner chamber, and by a lower wall (39) and optionally a supporting layer (11) resting on said lower wall,
- a buffer chamber (6) configured for receiving a buffer solution, said buffer chamber comprising at least an upper compartment (7) located at an upper end of the inner chamber and a lower compartment (8) located at a lower end of the inner chamber, and optionally further comprising a lateral compartment (9) in fluid communication with the upper compartment and the lower compartment,
- an upper wall (26) comprising a second plurality of openings (13, 13'),
- a lower wall (34) comprising a third plurality of openings (31, 31'),
- a set of electrodes consisting of one or more first electrodes (29) and one or more second electrodes (29') and optionally one or more third electrodes (29"), or means to connect (28) to a set of electrodes consisting of one or more first electrodes and one or more second electrodes;
   wherein the upper wall (27) of the inner chamber comprises a first plurality of openings (10, 10') being defined by a lateral wall which protrudes in the upper compartment and optionally in the inner chamber, and wherein:
   a) each frame comprises a hinge or an internal slidable connection, wherein the two or more frames are pivotably hinged to one another via said hinge or wherein the two or more frames are connected to one another via said internal slidable connection, and/or
   b) the assembly comprises an external slidable connection (16), wherein the two or more frames are releasably connected to one another via said external slidable connection,
      such that in a first configuration the two or more frames abut each other in a longitudinal direction, and in a second configuration the two or more frames do not abut each other in a longitudinal direction while still connected to one another via said hinge or internal slidable connection or via said external slidable connection,
and wherein said first and second plurality of openings are arranged to match each other and to match an SBS format and/or an SLAS standard at least when the assembly is in the first configuration.

The electrophoresis assembly of the present disclosure may be reusable or may be intended for a single use.

SBS formats or SLAS standards are defined by two dimensions: a first dimension corresponding to rows, and a second dimension corresponding to columns. The electrophoresis assembly described herein thus matches a 48-well standard (arranged in 6 X 8), a 96-well standard (arranged in 8 X 12), a 384-well standard (arranged in 16 first openings X 24 frames, or in 16 frames X 24 first openings), a 1536-well standard (arranged in 32 first openings X 48 frames, or in 32 frames X 48 first openings), a 3456-well standard (arranged in 48 X 72) or a 9600-well format (arranged in 120 X 80).

### Frames

The present electrophoresis assembly comprises two or more frames (2). Each frame has at least one opening (18) in an upper end and is configured for holding at least one inner frame (3). The opening (18) is thus of such dimensions that it allows at least one inner frame (3) to be inserted therein. In some embodiments, each frame can receive one inner frame or more, such as two inner frames.

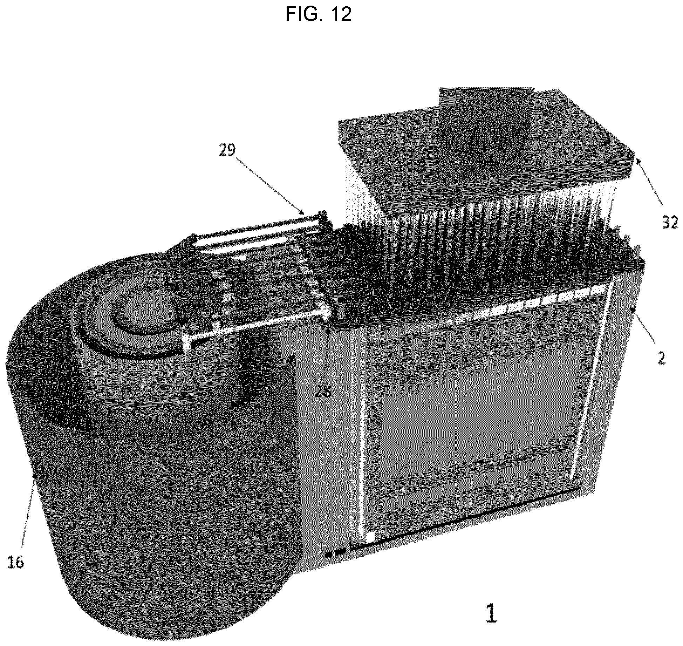

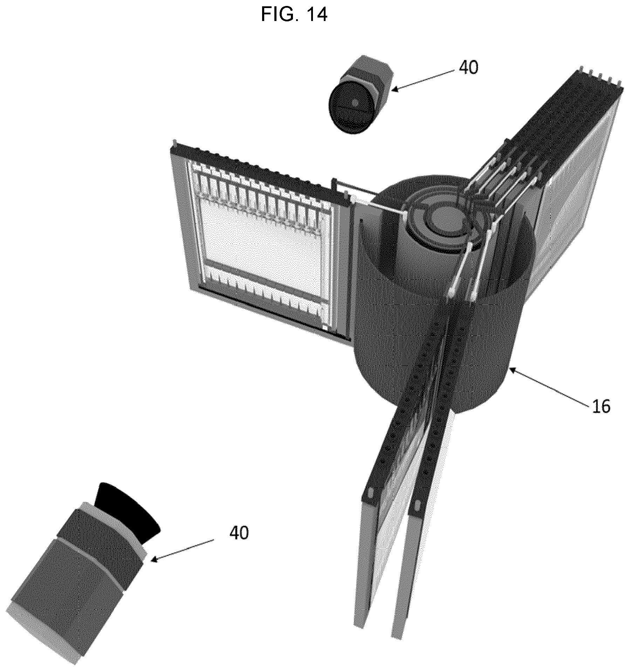

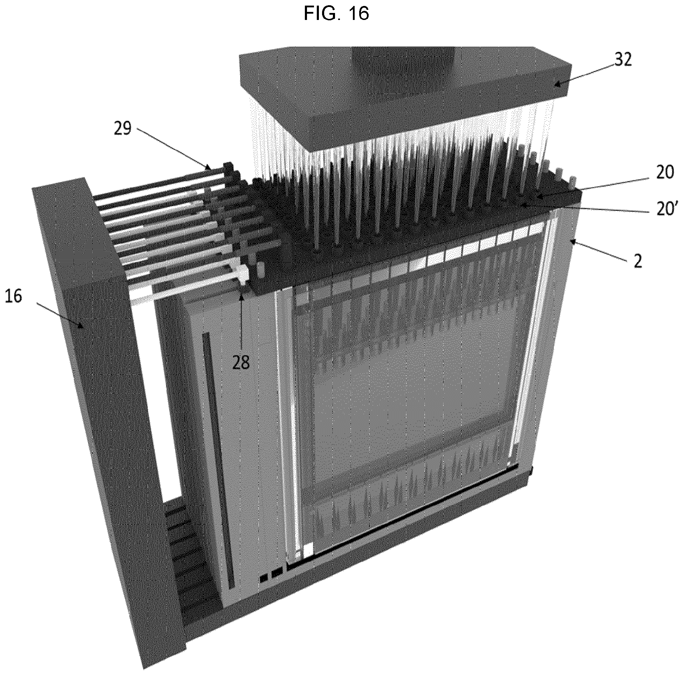

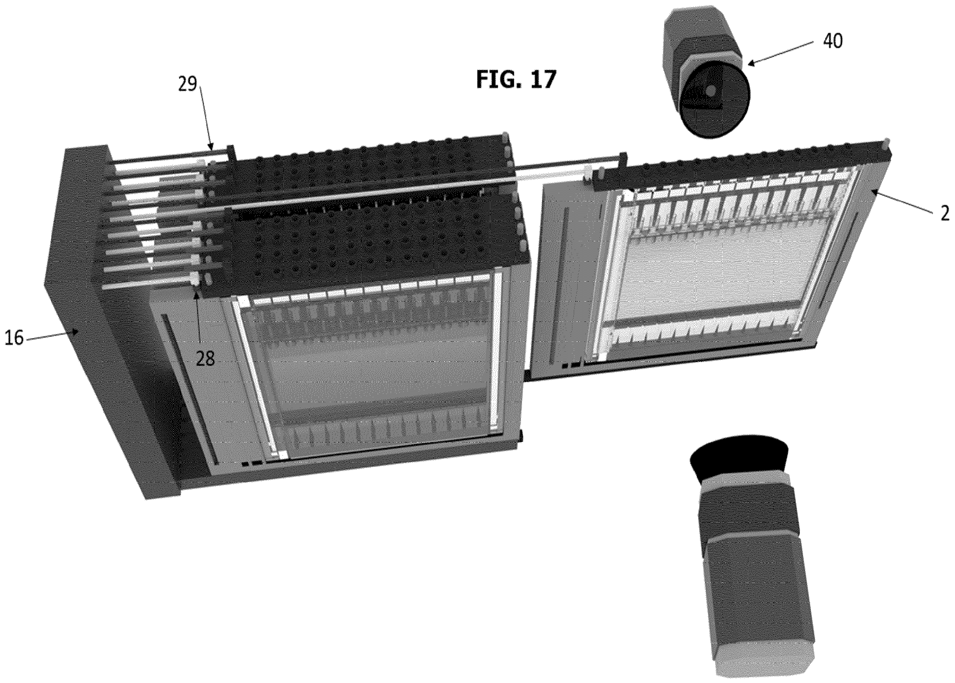

The frames of the assembly are attached together in such a way that the assembly can be arranged in different configurations. The frames are thus configured in such a way that they can be arranged in a first configuration (a closed configuration) where they abut each other in a longitudinal direction, as illustrated by way of example on Figures 12 and 16. The frames can also adopt a second configuration (an open configuration), which allows optical access to the separation matrix or matrices held in the frames from the side, as illustrated by way of example on Figures 14 and 17. The frames can also be arranged in intermediate configurations, i.e. any configuration going from the first configuration to the second configuration.

In the first configuration, the two or more frames abut each other in a longitudinal direction, i.e. the biggest lateral side of two adjacent frames are adjacent and parallel to one another along the entire surface of their biggest lateral side. In the first configuration, preferably all frames abut each other, and optical access is, if at all, only possible from one side of the frames. In the second configuration, the two or more frames do not abut each other. In the second configuration, not all of the frames abut each other - some frames may still abut each other, but at least one frame is accessible from one or both sides for optical measurements. Access to the separation matrices from the side of each frame, in particular optical access, is thus possible at least when the assembly is in the second configuration.

In other words, in a first configuration, when each frame of the assembly comprises at least one inner frame comprising a separation matrix as described herein, at least one lateral side of the separation matrix may not be directly accessible, in particular optical access to said lateral side may not be possible, as access may be prevented by the inner frames held or present in the adjacent frames. In a second configuration, when each frame of the assembly comprises an inner frame comprising a separation matrix inserted therein as described herein, at least one lateral side of the separation matrix is directly accessible, for example optical access is possible. The term "lateral side" herein refers to a side of the separation matrix, usually the biggest lateral side.

The term "abutting each other in a longitudinal direction" in relation to two frames refers herein to the fact that the frames abut each other on their biggest lateral side, i.e. the side that defines the biggest plane of the frame.

The assembly when in the second configuration can form a closed perimeter. In such embodiments, the assembly comprises at least three frames, and the two frames located in the extremities of the assembly can be connected to one another; the assembly can thus form a closed perimeter. Depending on the number of frames within the assembly, the closed perimeter thus formed can adopt various shapes. An assembly comprising three frames will have an essentially triangular shape. An assembly comprising an even number of frames can have an essentially rectangular shape. An assembly comprising four frames, or a number of frames which is a multiple of four, can have an essentially square shape. An assembly comprising an even number of frames greater than four, in particular an even number which is not a multiple of four, can have an essentially regular shape. Uneven numbers of frames will result in other shapes. The assembly can however also be used in configurations where the frames when in the second configuration, do not form a closed perimeter.

In order to allow optical access to the separation matrix held within the inner frame, which in turn is held within the frame, the two or more frames may comprise an inner cavity on a lateral surface, or a lateral surface or a lateral side of the two or more frames may comprise a transparent surface, which allows optical access to the inner frame(s), and hence to the separation matrix/matrices, held in the assembly, at least in the second configuration. Such transparent surface when present is made of a material which allows optical access, in particular transmission of light, such as UV light, laser light or blue light. In embodiments where one or both lateral sides of the frame is/are hollow, the frame may comprise a sheet, which can be peeled off, cut, removed or pierced, and which can be fixed thereon. The sheet can be peeled off, cut, removed or pierced, either to facilitate extraction of the separated molecules of interest, or prior to performing electroblotting if it is desirable to do so.

In some embodiments, the assembly comprises at least two frames, such as at least three frames, such as at least four frames, such as at least five frames, such as at least six frames, such as at least seven frames, such as at least eight frames, such as at least nine frames, such as at least ten frames, such as at least eleven frames, such as at least twelve frames, or more. Each frame may comprise one inner frame or more, such as two inner frames. Thus in some embodiments, each frame comprises one inner frame. For example the assembly comprises two frames and two inner frames, one inner frame in each frame, or the assembly comprises three frames and three inner frames, four frames and four inner frames, five frames and five inner frames, six frames and six inner frames, seven frames and seven inner frames, eight frames and eight inner frames, nine frames and nine inner frames, ten frames and ten inner frames, eleven frames and eleven inner frames, or twelve frames and twelve inner frames, or more.

In other embodiments, each frame comprises two inner frames. For example, the assembly comprises two frames and four inner frames, two in each frame, or the assembly comprises three frames and six inner frames, four frames and eight inner frames, five frames and ten inner frames, six frames and twelve inner frames, seven frames and fourteen inner frames, eight frames and sixteen inner frames, nine frames and eighteen inner frames, ten frames and twenty inner frames, eleven frames and twenty-two inner frames, or twelve frames and twenty-four inner frames, or more. In some embodiments, some frames comprise one inner frame and some frames comprise two inner frames.

The frame is defined by lateral walls which allow optical access to the inner chamber, i.e. which allow optical access to the separation matrix held in the inner chamber at least when the electrophoresis assembly is in the second configuration. The lateral walls of the frame may be hollow, and thus define a frame cavity, or they may be manufactured from a material allowing optical access through one lateral side, thus enabling optical access to the separation matrix held in the inner frame at least when the electrophoresis assembly is in the second configuration. The lateral sides of the frame preferably consist of a material which allows transmission of light, such as UV light, laser light or blue light.

### Hinge, internal slidable connection and further slidable connection

In order to enable the assembly to be arranged in a first configuration and in a second configuration, in some embodiments each frame comprises a hinge or an internal slidable connection. An internal slidable connection can be for example ridges or magnets, which allow the frames to be moved in a parallel direction. In such embodiments, the two or more frames in the second configuration can be in extension of each other.

Thus in some embodiments, the frames comprise a hinge. The frame defines a rectangle comprising four sides: an upper side (where the inner frame can be introduced through the opening (18)), and a lower side, a right side and a left side (which together hold the inner frame with the separation matrix in place). The hinge is preferably located on the right side and/or on the left side of the frame. The hinge is preferably not located on the upper side or on the lower side. The hinge may be one hinge, two hinges, three hinges or more.

Where the frame(s) comprise(s) a hinge on one side, it may be advantageous for the frame to also include additional connection means on another side, for example magnets (30, 30'). The frame may thus comprise a hinge on at least one side, through which it can be connected to another identical frame, and may further comprise additional connection means such as magnets on another side. The additional connection means may be located on the side of the frame opposite to the hinge, and/or they may be located on the upper and/or the lower end of the frame. Such additional connection means may help maintain the inner frames comprised in the assembly in place to facilitate introduction of a liquid or a molten separation matrix in the inner chamber (5) of the inner frames (3) and/or to facilitate loading of samples in the assembly, as they may prevent the creation of gaps between the frames.

Preferably, the additional connection means are magnets. The magnets may be coated with isolating material or cushioning material.

In other embodiments, the frame comprises an internal slidable connection, for example a ridge, a groove or a slit, which allows the frame to be slidably connected to another frame. Preferably, the internal slidable connection is located on the upper and/or on the lower side of the frame. This allows two frames connected via a slidable connection to slide in relation to one another.

Another way of enabling the assembly to be arranged in a first configuration and in a second configuration can be achieved when the assembly comprises an external slidable connection, some examples of which (16) are represented in Figures 12 and 14. Such an external slidable connection may be external to the frames, and may be in the form of a ring or a hollow cylinder to which the two or more frames can be attached. The frames can thus be pushed in the first configuration, and can be maintained in this configuration for example via magnets present on the frames, or by other locking means, while the second configuration is achieved for example by pulling the frames so that at least two adjacent frames no longer abut each other in a longitudinal direction, but are only minimally, if at all, in contact with one another. In some cases, the only contact between two consecutive frames in the second configuration is through the external slidable connection.

The first configuration corresponds to a closed configuration. This configuration is particularly advantageous for introducing a liquid or a molten separation matrix in the inner chamber (5) of the inner frames (3) held within the assembly and/or to facilitate loading of samples in the assembly, as will be detailed herein below. The second configuration corresponds to an open configuration. This configuration is particularly advantageous for monitoring the separation matrices held within the inner frames.

### Inner frame

Each frame of the present electrophoresis assemblies is configured for holding at least one inner frame (3), which in turn is configured for holding at least one separation matrix such as a gel (4) or a liquid separation matrix. Preferably, the electrophoresis assembly is provided in a ready-to-use form, i.e. each inner frame holds at least one separation matrix such as a gel (4) or a liquid separation matrix.

The inner frame comprises: an inner chamber (5) configured for receiving and holding the separation matrix, a buffer chamber (6) configured for receiving and holding a buffer solution, and a set of electrodes consisting of a set of first electrodes (29) and a set of second electrodes (29'). The inner frame is thus defined by the inner chamber (5) and the buffer chamber (6) as well as by an upper wall (26) and a lower wall (34).

### Inner chamber

The inner chamber (5) can receive and hold a separation matrix (4) such as a gel or a liquid separation matrix. The electrophoresis assembly may in some embodiments be pre-filled, i.e. a separation matrix may already be provided in each inner chamber of each inner frame. In practice, a molten separation matrix can be inserted through the second plurality of openings (13, 13') in the upper wall (26) of the inner frame (3) and through the first plurality of openings (10, 10') in the upper wall (27) of the inner chamber (5) into the inner chamber, and if necessary left to solidify at room temperature or upon cooling. The separation matrix can also be an unsolidified liquid matrix, as known for example from low melting gels and other dense fluids. The inner chamber is defined by lateral walls which allow optical access to the inner part of the inner chamber, i.e. which allow optical access to the separation matrix held in the inner chamber at least when the electrophoresis assembly is in the second configuration.

The inner chamber is further defined by an upper wall (27) in the upper end of the inner chamber, and by a lower wall (39). The inner chamber may further comprise a supporting layer (11) in a lower end of the inner chamber, for example resting on the lower wall (39).

The lateral walls of the inner chamber may be hollow, and thus define an inner cavity, or they may be manufactured from a material allowing optical access through their lateral side, thus enabling optical access to the separation matrix held therein at least when the electrophoresis assembly is in the second configuration. The lateral sides of the inner frame preferably consist of a material which allows transmission of light, such as UV light, laser light or blue light. In embodiments where one or both lateral sides of the inner frame is/are hollow, the inner frame may comprise a sheet, which can be peeled off, cut, removed or pierced, and which can be fixed thereon. The sheet provides a fluid-tight separation and protects the separation matrix, thus avoiding its drying out, for example at least until samples are loaded or until electrophoresis is complete. The sheet can be peeled off, cut, removed or pierced prior to extracting the separated molecules of interest or prior to performing electroblotting, if desired.

In some embodiments, the inner chamber comprises or holds multiple cavities, wells or tubes filled with the separation matrix while the lateral side is transparent for optical access.

### First plurality of openings

The upper wall (27) of the inner chamber (5) comprises a first plurality of openings (10, 10'). These are configured to match an SBS and/or an SLAS format or standard, which enables the use of a liquid handler to perform electrophoresis. The first plurality of openings can in practice be in the form of channels or ports, for example defined by a lateral wall which protrudes at least in the upper compartment, and optionally also in the inner chamber. The lateral wall in practice helps containing the samples so that these remain in the vicinity of the first openings, such that when an electrical current is applied to the electrophoresis assembly, charged molecules comprised within the samples can migrate electrophoretically into the separation matrix so that electrophoresis can be performed. The lateral wall also facilitates loading of the samples.

The first plurality of openings matches an SBS format and/or an SLAS standard at least when the assembly is in the first configuration. Such standards are defined by two dimensions: a first dimension corresponding to rows, and a second dimension corresponding to columns. The first plurality of openings corresponds to one of the first or second dimension, while the number of frames within the assembly provides the other dimension. For example, in order for the electrophoresis assembly to match a 96-well standard consisting of 12 rows and 8 columns, the first plurality of openings may consist of 8 openings, and 12 frames are provided in the assembly; or the first plurality of openings may consist of 12 openings and 8 frames are provided in the assembly. The electrophoresis assembly can thus match a 48-well standard (arranged in 6 X 8), a 96-well standard (arranged in 8 X 12), a 384-well standard (arranged in 16 first openings X 24 frames, or in 16 frames X 24 first openings), a 1536-well standard (arranged in 32 first openings X 48 frames, or in 32 frames X 48 first openings), a 3456-well standard (arranged in 48 X 72) or a 9600-well format (arranged in 120 X 80).

In some embodiments, the first pluralities of openings may not be physically present, i.e. may not be formed, prior to sample loading. In this case the second piercing elements with loading channels will slightly penetrate the separation matrices and thereby deliver samples directly into the separation matrices. The first piercing elements still act the same way as electrodes from the other end.

### Buffer chamber

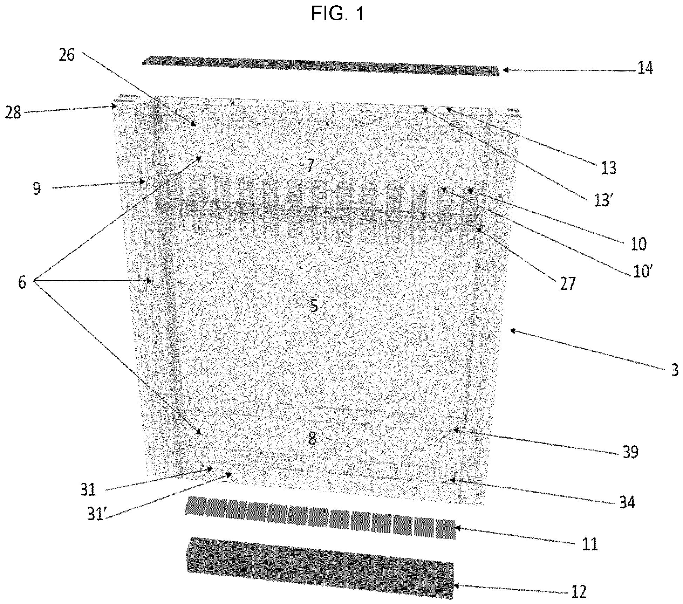

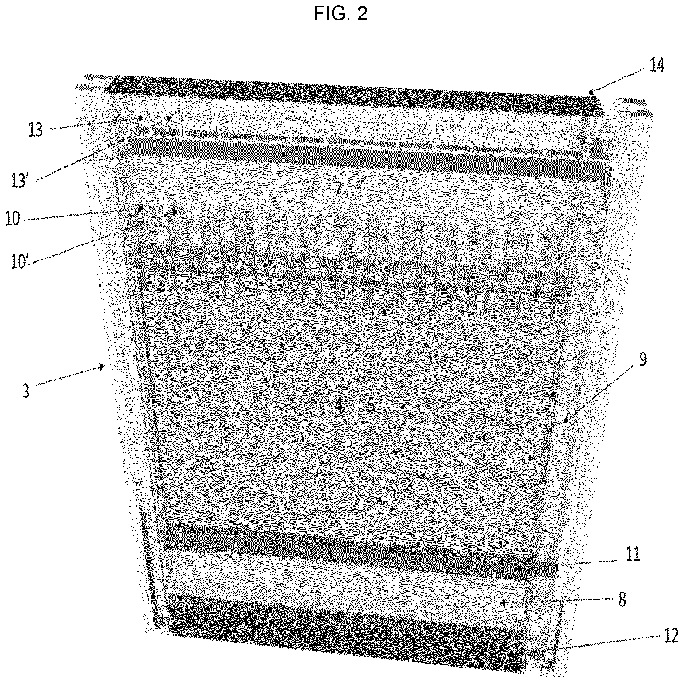

The buffer chamber (6) can consist of a single chamber, as shown for example on Figures 1 and 2, which may be divided in several compartments, for example an upper compartment (7) located at the upper end of the inner chamber, a lower compartment (8) located at the lower end of the inner chamber, and a lateral compartment (9) which is in fluid communication with both the upper compartment and the lower compartment. The buffer chamber may alternatively consist of several compartments which are not in fluid communication with one another, for example a lower compartment and an upper compartment. The buffer chamber is preferably filled or at least partially filled with a buffer solution prior to use. The buffer chamber is fluid-tight, i.e. there is no fluid communication between the buffer chamber and the outside of the inner frame - but there is typically at least some fluid communication between the buffer chamber and the inner chamber (5) through the first plurality of openings (10, 10') in the upper wall (27) of the inner chamber. When the inner chamber is pre-filled with a separation matrix, the separation matrix thus can be in contact with the buffer solution via the first plurality of openings (10, 10'). Thus in some embodiments, the inner chamber does not comprise buffer.

### Buffer solution

The buffer chamber is configured to receive a buffer solution, which is a conductive fluid suitable for performing sample migration, e.g. by electrophoresis. The inner chamber holding the separation matrix preferably does not comprise the buffer, or is essentially devoid of buffer. Separation matrices typically contain a high percentage of conductive fluid, which is sufficient for separating the molecules in the samples without actually submerging the separation matrix in the buffer.

Conductive fluids and buffers suitable for performing electrophoresis are known to the skilled person. In general, a buffer should be chosen with a pKa close to the desired pH; most often, buffers with a pKa in the range of 7-9 are suited for most electrophoretic purposes. Suitable electrophoresis buffers may be one of the following: TAE buffer, TBE buffer, Tris-Glycine SDS PAGE buffer, or Tris-Tricine SDS PAGE buffer.

In some embodiments, the buffer may comprise a dye or a marker allowing for staining or visualisation of the samples, such as any of the dyes and stains described herein below. For example, RedSafe or ethidium bromide may be added to buffers used in electrophoresis migration of nucleic acids, as is known in the art. Adding a dye or a stain to the conductive fluid may be desirable in some embodiments, and renders the addition of a dye or a stain to the sample unnecessary.

### Second and third plurality of openings

The upper wall (26) of the inner frame (3) comprises a second plurality of openings (13, 13'). The lower wall (39) of the inner frame comprises a third plurality of openings (31, 31'). The second and third pluralities of openings, similar to the first plurality of openings, match an SBS and/or an SLAS format. At least the first and the second pluralities of openings also match each other, i.e. they are aligned in such a way that a liquid handler can be introduced in a first opening and in a corresponding second opening. The third plurality of openings may also match the first and second pluralities of openings, or it may be provided slightly askew compared to the first and second pluralities of openings. This can be useful to run electrophoresis from both ends of the separation matrix, where it can be desirable to minimise the risk of samples running together in the middle. The third plurality of openings may thus match the same SBS and/or SLAS format as the first and second pluralities of openings, or it may match a different SBS and/or SLAS format.

In some embodiments, the inner frame comprises a pierceable seal (14) covering the second plurality of openings. The pierceable seal is penetrable and fluid-tight, and can be made as is known in the art, for example it is made of aluminium foil or a sealant such as a rubber sealant.

In some embodiments, the second and/or the third pluralities of openings may not be physically present, i.e. may not be formed, prior to sample loading. In this case the second piercing elements with loading channels will slightly penetrate the separation matrices and thereby deliver samples directly into the separation matrices. The first piercing elements still act the same way as electrodes from the other end.

### Supporting layer

The inner frame may comprise a supporting layer (11) resting on the lower wall (39) of the inner chamber. Such a supporting layer may be helpful to support the molten separation matrix until it has solidified. The supporting layer is preferably partially fluid-tight, and ensures that a molten separation matrix introduced in the inner chamber does not spill or diffuse to the lower buffer compartment (8) or the buffer chamber (6). The supporting layer may be porous, so that liquids less viscous than a molten separation matrix, for example a sample solution, can pass through, while the molten separation matrix cannot. Such materials are known in the art, and can include plastic, fabrics or textiles such as cotton, or paper.

### Fluid-tight bottom layer

In some embodiments, the inner frame further comprises a pierceable, fluid-tight bottom layer (12) in its lower end. As detailed below, the electrophoresis assembly in some embodiments is provided with a first plurality of first piercing elements in the lower part of the frame. The bottom layer at least in those embodiments is made of a material that allows the first piercing elements to penetrate the supporting layer, so that they go through the supporting layer. The supporting layer can thus be manufactured from rubber or silicone, or any other suitable material known in the art.

In some embodiments, the fluid-tight bottom layer may be made of a conductive material, and can thus act as a negative or positive electrode during electrophoresis. In such embodiments, the fluid-tight bottom layer may comprise a plurality of openings or channels matching the third plurality of openings. Said openings or channels may be fluid-tight prior to electrophoresis, and may comprise a seal which can be ruptured either by the first piercing elements when present, or by a sample loading device such as a pipette tip.

### Multiple inner frames or separation matrices

In some embodiments, the frames hold more than one inner frame. For example, each frame holds two inner frames. In such embodiments, optical access to the separation matrix held within each inner frame is possible from one lateral side. In order to enable optimal optical monitoring of the separation matrix, it may be desirable in such embodiments to separate the two inner frames by blocking means, which can consist of a non-transparent barrier (21). The barrier may be in the form of a sheet or a membrane. This allows optical access to only one separation matrix from one given lateral side at least when the assembly is in the second configuration. When two inner frames are present within one cassette, the presence of such blocking means thus allows monitoring of the separation matrix within each inner frame for both inner frames individually. The frame can in such cases be flanked by two detection means, which independently each monitor a single separation matrix in one of the two inner frames; these can be monitored simultaneously.

Such blocking means may be external to the inner frames, for example they may comprise or consist of a non-transparent sheet separating the two inner frames from one another, or they may be integrated in one inner frame, thus dividing the inner frame in two. For example the blocking means comprise or consist of a coating on the back part of the containers, wherein said coating is configured to prevent optical access to one of the two separation matrices, at least when the assembly is in the second configuration.

In embodiments where the blocking means are internal to the inner frames, they may be provided as an integrated part of the inner frames, for example they may be formed by mould injection as known in the art. In such embodiments, the blocking means may be manufactured from the same material as the inner frame.

The blocking means may be made of the same material as the inner frames and/or as the frames, or may be made of plastic, glass or metal, provided that the material is non-transparent and prevents optical access. The skilled person will know which materials are suitable. The blocking means may in some embodiments be made of a conductive material such as a conductive metal, and may act as an electrode, or they may comprise means to connect to an electrode. This can be useful for recovering the separated molecules of interest comprised within the samples, or for performing electroblotting, as will be detailed below.

The blocking means preferably have such shape and dimensions that optical access to one of said two separation matrices is enabled from one side of a frame while optical access to the other of said two separation matrices from said side is prevented, at least when the assembly is in the second configuration.

### Piercing elements

In some embodiments, a first plurality of first piercing elements (17, 17') is provided in the lower part of the frame, each of said first piercing elements being configured to penetrate the supporting layer and optionally the pierceable, fluid-tight bottom layer when the inner frame is inserted in the frame, so that the first piercing elements are partially or completely inserted in the lower compartment and optionally so that the first piercing elements are partially or completely inserted in the inner chamber through the third plurality of openings. The first piercing elements are made of such a material that they can penetrate the fluid-tight bottom layer, or the openings or channels provided in the fluid-tight bottom layer, when present. The first piercing elements may be connected to electrodes, or may advantageously be configured to function as one electrode, for example a positive electrode or a negative electrode. This then requires that the first piercing elements be made of or be coated with a conductive material, and that they are connected to a power source.

The electrophoresis assembly may further comprise a second plurality of second piercing elements (19, 19') provided in the upper part of the frame. The second piercing elements are each configured to be partially inserted in the first plurality of openings, and are thus arranged to match the spacing of the first plurality of openings. The second piercing elements must thus also match the second plurality of openings, as they need to go through the second plurality of openings before reaching the first plurality of openings. In some embodiments, a pierceable seal (14) covers the second plurality of openings, and the second piercing elements are made of a material which allows them to penetrate, pierce and/or rupture the pierceable seal.

The second piercing elements may be connected to electrodes, or may advantageously be configured to function as one electrode, for example a positive electrode or a negative electrode. This then requires that the second piercing elements be made of or be coated with a conductive material, and that they are connected to a power source. In such embodiments, the second piercing elements act as an electrode of a charge opposite the charge of the electrode connected to the lower part of the frame or of the first piercing elements acting as electrode.

The second piercing elements may be configured to allow introduction of a liquid composition therein, to enable the liquid composition, for example a sample solution, to be introduced in the first plurality of openings.

The first and second piercing elements may comprise loading channels. In other words, they may be hollow, so that samples can be introduced in their upper end, and can exit the piercing elements in their lower end to reach the separation matrix. In such embodiments, the first and/or the second piercing elements may further comprise outer channels which extend outside the frame when they are in contact with the frame and which are in fluid communication which the loading channels. These outer channels may help facilitate introduction of the piercing elements. The loading channels and/or the outer channels may be provided with removable and/or pierceable capping means, in such a manner that they are fluid-tight prior to use. Such capping means may be selected from the group consisting of: a strip, such as a silicone strip, a layer of separation matrix such as a gel, and a filter such as a 450 nm filter. The outer channels of the first piercing elements and/or the outer channels of the second piercing elements may act as a third electrode, or may be in electrical connection with a third electrode, as is detailed further below.

In some embodiments, each piercing elements is the female part of a quick connector system as is known in the art. In such case, the male part of the quick connector system is embedded into the ends of the inner frames.

### Separation matrix

The choice of separation matrix will typically be dictated by the nature of the molecules to be separated in the matrix. The skilled person knows how to choose a separation matrix suitable for given molecules of interest. Separation matrices comprise gel cassettes suitable for electrophoresis as is known in the art.

In embodiments where the molecules of interest are nucleic acids, such as DNA or RNA, the separation matrix may be a gel or a gel cassette. Suitable gel cassettes for performing electrophoretic separation of nucleic acid molecules are known in the art, and include e.g. agarose gels. The concentration of agarose in the gel is typically determined by the expected size of the molecules of interest. For example, smaller molecules of interest can advantageously be separated in agarose gels of higher concentration than bigger molecules of interest.

For protein separation, the separation matrix may also be a gel cassette, typically a polyacrylamide gel cassette. Protein separation may involve denaturing methods and native methods. SDS-PAGE (sodium dodecyl sulfate polyacrylamide gel electrophoresis) is a denaturing method, where proteins are separated according to their electrophoretic mobility in the denatured state, as a function of the length of the polypeptide chain and its charge. SDS binding to the polypeptide confers an even distribution of charge per unit mass and thus results in separation by approximate size during electrophoresis. Native or non-denaturing gels allow for separation of proteins in their folded state according to their electrophoretic mobility, which in this case is a function not only of the charge-to-mass ratio but also on the physical size and shape of the protein. Several types of non-denaturing gels are commonly used for protein separation: blue native PAGE (BN-PAGE), clear native PAGE or native PAGE (CN-PAGE) and quantitative native PAGE (QPNC-PAGE). In BN-PAGE, the Coomassie blue dye provides the necessary charges to the proteins for electrophoretic separation. CN-PAGE separates acidic water-soluble and membrane proteins in polyacrylamide gradient gels. No charged dye is used, so the electrophoretic mobility depends on the intrinsic charge of the proteins. Migration distance is a function of protein charge, size and gel pore size. QPNC-PAGE is used to separate folded protein complexes.

For separation of carbohydrates, several types of separation matrices exist. Silica matrices can e.g. be used. Alternatively, alkaline polyacrylamide gels or gradient polyacrylamide gels can be employed. For separation of amino acids, capillary gel electrophoresis is commonly used.

Separation matrices often comprise wells in one end, typically the upper end; these correspond in the present electrophoresis assembly to the first plurality of openings. When the electrical field promoting migration of the samples through the separation matrix is generated in a direction parallel to the general orientation of the gel, samples are forced from the well into the separation matrix, where the molecules they contain are separated as described above and as otherwise known in the art.

In some embodiments, the separation matrix already has incorporated therein a dye or a marker allowing visualisation of the samples as migration progresses.

### Electrodes

The electrophoresis assembly is further provided with a set of electrodes or with means to connect to a set of electrodes. A set of electrodes comprises or consists of one or more first electrodes and one or more second electrodes, to which a current can be applied as is known in the art to generate an electrical field suitable for performing electrophoresis. The electrodes can be internal to the electrophoresis assembly, i.e. they can be included in the inner frame, or the inner frame can comprise means to connect to electrodes which are external to the inner frame. Each of the electrodes mentioned herein, i.e. each of the first, second or third electrode, is such that it can be either positive, neutral (unpowered), or negative, and so that their charge can be reversed if desired.

As detailed herein elsewhere, the first and/or the second piercing elements may function as electrodes, or be connected to electrodes.

### Dimensions of the frames and inner frames

It is preferred that the two or more frames and inner frames of the electrophoresis assembly all have the same dimensions. At any rate, the two or more frames preferably have at least the same height. Optionally, the two or more frames preferably also have the same thickness and/or the same width.

Separation matrices, such as gels, can for example have the following dimensions: 12 cm in width; 0.6 cm in thickness; 11 cm in height. Electrophoresis assemblies suitable for holding such separation matrices can aptly have the following dimensions: 13 to 14 cm in width or more; 0.85 cm in thickness or more; 11.25 cm in height or more.

In some embodiments, the electrophoresis assembly described herein comprises inner frames configured to match a separation matrix, e.g. a gel cassette, such as a standard separation matrix. Standard separation matrices are well-known in the art. For example, a standard separation matrix has 96 wells, 192 wells, 384 wells, 768 wells, 1536 wells, 3456 wells or 9600 wells. Thus, in some embodiments, the electrophoresis assembly in the first configuration has such dimensions that the upper part of the assembly, to which samples are loaded when the electrophoresis assembly holds one or more inner frames holding one or more separation matrices, matches the dimensions of a 96 well plate, a 192 well plate, a 384 well plate, a 768 well plate, a 1536 well plate, a 3456 well plate, or a 9600 well plate. In other words, when separation matrices are inserted in the electrophoresis assembly, the spacing between the wells of the separation matrices (corresponding to the first plurality of openings) when the electrophoresis assembly is in the first configuration match the spacings between the dispenser tips of standard manual or automatic liquid handlers as are known in the art. In this manner, high-throughput loading of the samples to the separation matrices may be achieved.

### Sample reservoirs

In some embodiments, the electrophoresis assembly comprises at least one sample reservoir, for example two sample reservoirs. These comprise wells, in which the samples comprising the molecules of interest can be placed, said wells matching the same SBS format and/or SLAS standard. In some embodiments, the sample reservoir can be a PCR plate, a microtiter plate, a deep well plate, or any other plate matching an SBS format and/or SLAS standard.

### Method for performing electrophoresis

The present electrophoresis assemblies can be used to perform electrophoresis with high-throughput. Thus is also provided herein a method for performing electrophoresis, comprising the steps of:
i) providing an electrophoresis assembly (1), comprising two or more frames (2), each frame having an opening (18) in an upper end and each frame being configured for holding at least one inner frame (3),
   wherein the inner frame is configured for holding at least one separation matrix such as a gel (4), and wherein the inner frame comprises:
   - an inner chamber (5) configured for receiving the separation matrix, said inner chamber being defined by lateral walls allowing optical access to the inner part of the inner chamber, by an upper wall (27) in an upper end of the inner chamber, and by a lower wall (39) and optionally a supporting layer (11) resting on said lower wall,
   - a buffer chamber (6) configured for receiving a buffer solution, said buffer chamber comprising at least an upper compartment (7) located at an upper end of the inner chamber and a lower compartment (8) located at a lower end of the inner chamber, and optionally further comprising a lateral compartment (9) in fluid communication with the upper compartment and the lower compartment,
   - an upper wall (26) comprising a second plurality of openings (13, 13'),
   - a lower wall (34) comprising a third plurality of openings (31, 31'),
   - a set of electrodes consisting of one or more first electrodes (29) and one or more second electrodes (29') and optionally one or more third electrodes (29"), or means to connect (28) to a set of electrodes consisting of one or more first electrodes and one or more second electrodes;
      wherein the upper wall (27) of the inner chamber comprises a first plurality of openings (10, 10') being defined by a lateral wall which protrudes in the upper compartment and optionally in the inner chamber, and wherein:
      a) each frame comprises a hinge or an internal slidable connection, wherein the two or more frames are pivotably hinged to one another via said hinge or wherein the two or more frames are connected to one another via said internal slidable connection, and/or
      b) the assembly comprises a external slidable connection (16), wherein the two or more frames are releasably connected to one another via said external slidable connection,
      such that in a first configuration the two or more frames abut each other in a longitudinal direction, and in a second configuration the two or more frames do not abut each other in a longitudinal direction while still connected to one another via said hinge or internal slidable connection or via said external slidable connection,
   and wherein said first and second plurality of openings are arranged to match each other and to match an SBS format and/or an SLAS standard at least when the assembly is in the first configuration,
   wherein at least one separation matrix is inserted in the inner frames, and
   wherein a buffer solution is introduced in the buffer chamber,
ii) arranging the electrophoresis assembly in a first configuration wherein the two or more frames abut each other in a longitudinal direction;
iii) loading a first plurality of samples comprising molecules of interest into the first plurality of openings;
iv) optionally, loading a second plurality of samples comprising molecules of interest into the third plurality of openings;
v) applying a current between the one or more first electrodes and the one or more second electrodes, whereby migration of the samples through the separation matrix is enabled;
vi) arranging the electrophoresis assembly in a second configuration wherein the two or more frames no longer abut each other in a longitudinal direction, so as to enable optical access to the separation matrix from a lateral side of the frame; and
vii) monitoring migration of the samples through the separation matrix via optical detection means (40);
wherein steps iii) to vi) can be performed in any order.

The electrophoresis assembly provided in step i) may be any of the electrophoresis assemblies described herein. The method may further include a step of inserting a molten separation matrix in the inner chamber, and allowing the separation matrix to solidify. This can be done before step i), or prior to step iii) where samples are loaded in the first plurality of openings; preferably the molten separation matrix is inserted while the assembly is in the first configuration.

The electrophoresis assembly is first arranged in a first configuration, where it matches an SBS format and/or an SLAS standard as described above, i.e. the number of frames defines one dimension of the SBS format, while the number of first (and second) openings defines the other dimension of the SBS format. Step iii) of loading samples comprising molecules of interest in the first plurality of openings is therefore facilitated, and can even be automated.

Once the samples are loaded, i.e. are in contact with the separation matrix through the first plurality of openings, a current is applied between the first electrode(s) and the second electrode(s) to enable migration of the samples through the separation matrix.

Migration of the samples in the separation matrix can then be monitored via optical detection means (40). This requires that the electrophoresis assembly be arranged in the second configuration, where optical access to both sides of at least one frame is possible from a lateral side. The frames can be monitored one after the other, or several frames can be monitored together.

Importantly, since the electrophoresis assembly is provided with a suitable buffer in the buffer chamber, the electrophoresis assembly does not require immersion in an electrophoresis buffer.

### Molecules of interest

Molecules of interest can be any molecule of interest comprised or suspected of being comprised in a sample of interest. The molecules of interest can thus be biomolecules, for example macromolecules such as nucleic acid molecules, for example DNA or RNA, proteins or carbohydrates. The molecules of interest can also be smaller molecules, such as amino acids, small peptides and monosaccharides or polysaccharides.

The molecules of interest can be comprised within a sample, and it may be desirable to perform electrophoresis in order to separate the molecules of interest from the remaining molecules comprised within the sample. The sample may be a biological sample or a synthetic sample, for example the product of a polymerase chain reaction (PCR); in this case the desired product of the PCR reaction can be separated from the other compounds comprised within the reaction such as primers, enzymes, and template nucleic acid.

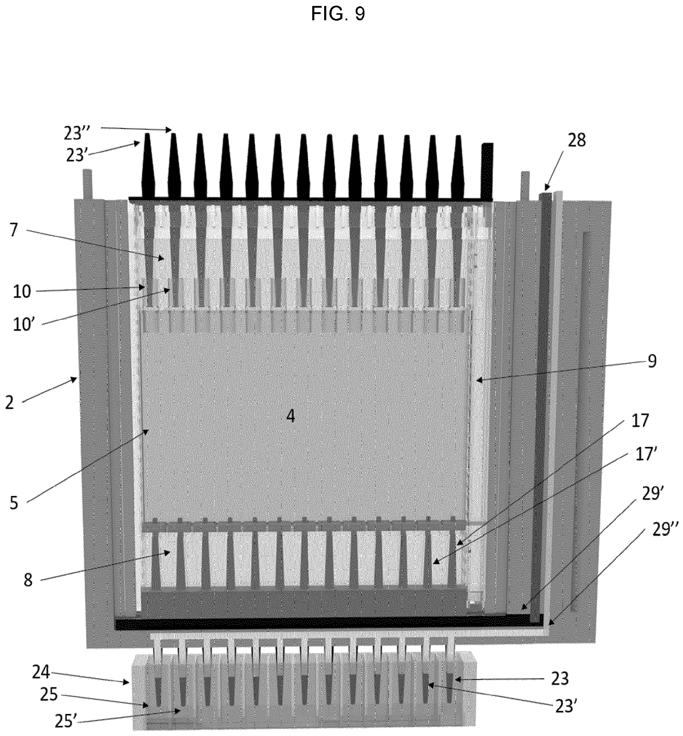

The present methods however also allow more complex samples. For example, the samples may also comprise whole cells, biomass, or a broth such as a fermentation broth. In such cases, the samples may be subjected to a step of lysis prior to transferring the samples to the first or third plurality of openings, as detailed herein below, and as exemplified in Figures 9 to 11.

### Dyes/stains

The samples may be mixed with a dye or a marker prior to loading, in order to facilitate monitoring of sample migration through the separation matrix in a later step. In some embodiments, several dyes or markers are used. Preferably, the sample, or at least the molecules of interest contained in the sample, is stained or dyed using common stains or dyes known in the art. As noted above, it is also possible to include the dye in the separation matrix, if it is undesirable or impractical to add it to the sample directly.

For staining of nucleic acid molecules such as DNA or RNA, common dyes include: SYBR^{®} Green, e.g. SYBR^{®} Green I or II, RedSafe^{™} stain, SYBR^{®} Gold, oxazole yellow, thiazole orange, PicoGreen^{®}, Safe-Green^{™}, ethidium bromide, and others. For staining of proteins, stains and dyes include: Instant-Bands treatment buffer, Coomassie-based stains, silver stains, negative staining with insoluble metal salts such as copper or zinc salts, fluorescent stains, tetramethylrhodamine (TRITC), and others. For staining of amino acids, ninhydrin (2,2-dihydroxyindane-1,3-dione) is a suitable stain. For staining of carbohydrates, 2-aminoacridone (AMAC), 2-aminobenzoic acid (2-AA), 7-amino-1,3-naphthalene disulfonic acid (ANDS), 8-aminonaphthalene-1,3,6-trisulfonic acid (ANTS), and 9-aminopyrene-1,4,6-trisulfonic acid (APTS), among others, are suitable.

### Sample reservoirs

In some embodiments, sample reservoirs are provided to facilitate loading of the samples. In some embodiments, at least a first sample reservoir (24) is provided comprising wells (25, 25') matching any of the SBS format and/or SLAS standards described herein. The samples in solution can then be introduced in the wells, and can easily be transferred using a liquid handler to the openings as described herein above.

In such embodiments, it may be advantageous to employ an electrophoresis assembly where the first piercing elements comprise loading channels as described herein above. The first piercing elements may in such embodiments be embedded in the inner frame, and the samples can be loaded directly in the loading channels. In other such embodiments, the first piercing elements are not embedded in the inner frame and can be placed directly in the wells of the first sample reservoir, so that the outer channels are contacted with the sample solution. The first piercing elements can become charged, either because they act as an electrode or because they are connected to an electrode. Once a current is applied to the first piercing elements, molecules of interest having a charge opposite to that of the first piercing elements can migrate from the sample solution upwards to the surface of the first piercing elements. Preferably, the sample solution is conductive. Once the molecules of interest have been attracted to the surface of the first piercing elements, they can be removed from the sample reservoir. The current can then be interrupted and electrophoresis can be performed as described above. In other embodiments, the current is reversed to facilitate migration, so that the molecules of interest are pushed away from the first piercing elements due to the first piercing elements now having the same charge as the molecules of interest, who will now migrate towards the electrode of opposite charge at the other end of the separation matrix. In some embodiments, the molecules of interest are attracted directly from sample reservoir/sample plate due to the first electrodes having a charge of the same polarity as the molecules of interest. In this way, the molecules of interest are repulsed and move upwards towards the upper second electrode with a charge of opposite polarity. Once the molecules of interest have entered the separation matrix, a similar operation can if desired be performed to attach another group of molecules of interest to the second piercing elements. This other group of molecules of interest can be from the same samples, and from the same first sample reservoir, or they can be from another set of samples, and be provided in a second sample reservoir, which also matches an SBS format and/or SLAS standard as described above. When such dual electrophoresis is performed, both groups of molecules of interest have opposite charges, and will migrate in opposite directions toward each other within the same separation matrix.

In some embodiments, the samples comprise whole cells, biomass or a broth such as a fermentation broth. The present methods can be adapted so that these can be lysed prior to collecting and loading the samples, so that the molecules of interest which the samples, cells, biomass or broth are suspected of comprising are released from the cells, biomass or broth, thereby facilitating the entire procedure, as the need for preprocessing the samples is alleviated. In such embodiments, the first piercing elements comprise outer channels protruding out of the frame. The first piercing elements may be electrically connected to one of the two electrodes required for electrophoresis, while a second electrode for electrophoresis is provided in the other end of the separation matrix. The first piercing elements are further electrically connected to a third electrode via the outer channels, which third electrode is located lower than the first electrode; in some embodiments, the outer channels of the first piercing elements are made of a conductive material and connected to a power source, and can thus act as the third electrode. After the outer channels of the first piercing elements are introduced in the wells of the sample reservoir, an electrical current is applied to the third electrode, preferably in the form of one or more pulses, thereby resulting in lysis of the cells, biomass or broth comprised within the sample solution. This allows the molecules of interest suspected to be in the cells, biomass or broth, to be released therefrom and into the sample solution. The outer channels may, in order to facilitate electrophoresis, contain in their inner part one or more of: a separation matrix, a resin or a molecular sieve. This can be useful to ensure that only molecules of a certain given size or with certain given properties will enter the separation matrix.

Once lysis is achieved, the third electrode is switched off. The first piercing elements can be removed from the sample reservoir, a current can be applied to the first and second electrodes, and electrophoresis can start.

### Loading of samples

The samples comprising or suspected of comprising the molecules of interest must then be loaded into the separation matrices, preferably through the first plurality of openings and/or loading channels as described above. In order to facilitate sample loading, the samples may be mixed with high density solutions, as is known in the art, to prevent the samples from diffusing out of the openings or channels.

The electrophoresis assembly disclosed herein allows for easy sample loading, preferably in a high-throughput manner. In step vi) of the method, the electrophoresis assembly comprising the separation matrices, either solid or liquid, as detailed herein above, and loaded with samples, is arranged in a first configuration wherein the two or more frames it comprises abut each other in a longitudinal direction. When in this configuration, the loading channels of the first and/or second plurality of openings are in close vicinity. This allows for easy pipetting of the sample, and may in some embodiments allow use of a manual or automatic liquid handler.

For example, in a specific embodiment, the electrophoresis assembly comprises eight frames for holding eight separation matrices with 12 wells each (defined by the first plurality of openings, which is matched by the second plurality of openings). When in the first configuration, such an electrophoresis assembly advantageously matches the dimensions of a 96-well plate. In other words, the wells of the eight separation matrices are placed in such a manner that the spacing therebetween corresponds to the spacing between the wells of a 96-well plate. Liquid handlers having corresponding sizes thus enable easy and rapid sample loading; for example, the samples to be loaded on the gel may be provided in a 96-well plate, and easy transfer of the samples from the plate to the electrophoresis assembly can thus be achieved with a liquid handler. It will be obvious to the skilled person that less than eight frames (and less than eight separation matrices) may also be used, but the spacing may still aptly match that of the dispensing ends of a liquid handler. Conversely, the electrophoresis assembly may comprise more than eight frames and still be easily handled if it matches a liquid handler, since individual loading of the samples is thus avoided.

The present electrophoresis assembly can be scaled up as follows. It may be impractical or difficult to load separation matrices with many wells. In order to reduce the volume of the electrophoresis assembly, the spacing between the wells may be as on a 96 well plate or a 192 well plate, and the frames may be scaled up in one or both directions. It may also be advantageous to have two separation matrices within one frame, as described herein. In such embodiments, where a frame comprises two separation matrices, it may be advantageous to also include blocking means between the two frames, such as an intercalator or a separation barrier, as described herein above. The term intercalator refers here to a thin sheet or plate of a material which preferably does not allow transmission of light, in order to facilitate imaging as it will block the signal from one of the separation matrices and thus allow proper imaging of the other separation matrices from a lateral side. The material of which the intercalator is made can be for example black plastic, and the intercalator has a thickness such that it effectively blocks light transmission. The intercalator may also be made of a conductive material, and can in such embodiments function as an additional electrode, as will be further detailed below.

The skilled person will be able to easily scale up the number and/or dimensions of frames and/or wells to meet his/her needs.

In some embodiments, a volume of samples are loaded in the first plurality of openings, and another volume of samples (the same, or different samples) can be loaded in the third plurality of openings.

In some embodiments, the piercing elements, i.e. the first piercing elements and/or the second piercing elements, may be configured as an electrode. For example, they may be coated with a conductive material, and connected to an electrode. The piercing elements can thus become charged, which can be useful for preprocessing complex samples such as comprising whole cells, thereby facilitating the introduction of the molecules of interest into the separation matrix, as will be described in further detail below.

In some embodiments, any of the first or second piercing elements thus can become charged. By applying a pulse electric field to the piercing elements after they have been introduced in the corresponding sample reservoir, samples comprising whole cells can be lysed, thus releasing the molecules of interest in the sample solution. The molecules of interest can be attracted to the piercing elements as described herein. The present methods can thus advantageously be used on a variety of crude samples, such as samples comprising whole cells, for examples samples obtained from a fermentation broth, and samples containing biomass. This current can then be interrupted before performing electrophoresis, or it can be reversed, in which case the molecules of interest will be pushed away from the piercing elements.

### Migration of samples

Electrophoretic migration in the separation matrix is performed as is known in the art. More specifically, an electrical current is applied between the first electrode(s) and the second electrode(s). The electrical current has a direction parallel to the large lateral side of the separation matrix. If samples comprising the molecules of interest are loaded in the first plurality of openings, the samples will, prior to applying the electrical current, be resting on top of the separation matrix. Applying a current such that the electrode at the other end of the separation matrix has a charge opposite the charge of the molecules of interest and the electrode on the end of the separation matrix where the first plurality of openings is located has the same charge as the molecules of interest then enables migration of the molecules of interest first into the separation matrix, and then separation of the molecules of interest is effected over time.

In some embodiments, it may be desirable to perform electrophoresis on several groups of samples: a first group can be introduced in the separation matrix as described above via the first plurality of openings, while a second group of samples can be introduced in the separation matrix via the third plurality of openings at the other end of the separation matrix. In such embodiments, the molecules of interest comprised within the first group of samples and the second group of samples have opposite charges. In such embodiments, the first group of samples is loaded in the first plurality of openings as described above, and a current is applied for a duration sufficient to ensure that the molecules of interest have entered the separation matrix. The current can then be interrupted. The entire electrophoresis assembly can then be turned upside down, resulting in the third plurality of openings now being located on top. The second group of samples can then be loaded into the third plurality of openings as described. The first and the second group of samples may be the same samples or different samples. The molecules of interest within the first and the second group of samples are however different, and have at least opposite charges - as it is otherwise not possible to perform electrophoretic migration on both groups at the same time.

For example, if a group of samples is provided comprising proteins, a volume of the samples is first loaded into the first plurality of openings, and a current is applied so that the positively charged proteins (and possibly some neutral proteins) migrate towards the other end of the separation matrix because the corresponding electrode is negative. After a short time, typically a couple of minutes, the positively charged proteins have entered the separation matrix. The current can then (but does not have to) be interrupted. The electrophoresis assembly is turned upside down, and a volume of the samples is loaded into the third plurality of openings. The current is reestablished. The electrode on the other end of the separation matrix is positive, hence negatively charged proteins comprised within the samples will enter the separation matrix and migrate towards the positive electrode. Both positively charged and negatively charged proteins will thus migrate toward the center of the separation matrix. As the present methods allow continuous monitoring of migration progression, the current can be interrupted before the two groups of proteins meet at the center of the separation matrix.

In other embodiments, where the outer channels of the first or second piercing elements are in contact with samples in the sample reservoirs, there is no need to load the samples. Instead, once the first group of molecules of interest are introduced in the separation matrix via their upward migration through the loading channels of the first piercing elements. Once the first group of molecules of interest has entered the separation matrix, the electrophoresis assembly is turned upside down, and the second group of molecules of interest (having a charge opposite to the charge of the first group of molecules) is now introduced in the separation matrix via their upward migration through the loading channels of the second piercing elements. Once both groups of molecules have entered the separation matrix, electrophoresis is performed as described above: both positively charged and negatively charged molecules will thus migrate toward the center of the separation matrix.

### Monitoring migration

After the samples have been loaded, a current is applied between the first and second electrodes, thereby allowing migration of the samples through the separation matrix.

The method further comprises a step of monitoring migration of the samples through the matrix. This can be achieved for example with the naked eye, or using suitable detection means as described below.

In some embodiments, monitoring is performed in real-time, i.e. in a continuous manner. In other embodiments, monitoring is performed at punctual times, for example every second, every 10 seconds, every 30 seconds, every minute, every second minute, every 5 minutes. A decision may be made by the user (or by appropriate automated means) to interrupt the electrical field by interrupting the current between the electrodes if the samples have migrated sufficiently.

In some embodiments, particularly when only one group of samples is going through electrophoresis, the current is interrupted before the molecules of interest have migrated so far through the separation matrix that there is a risk that they might exit the matrix at the lower end. However, using the present methods and assemblies, it is also possible to allow the molecules of interest to migrate all the way through the separation matrix until the molecules of interest reach the openings in the other end of the separation matrix. The molecules of interest can then be collected directly from the openings, e.g. using a pipette tip, for example using an automated or manual liquid handler.

In embodiments where two groups of samples are loaded and separated electrophoretically, it may be advantageous to interrupt the current before the two groups of molecules of interest meet around the central portion of the separation matrix. At any rate, migration should proceed for a period of time sufficient to allow proper separation of the molecules of interest from the other molecules contained in the sample, as is known in the field.

Monitoring migration may require the presence of a dye or a stain either in the sample or in the conductive fluid, as explained herein above.

While the step of loading the samples is greatly facilitated by arranging the electrophoresis assembly in the first configuration, monitoring of the separation matrices requires that the electrophoresis assembly is arranged in such a way that optical access to at least one frame is possible from both lateral sides at the same time. Monitoring is performed using optical detection means. Such optical detection means typically comprise a light source and imaging equipment.

The light source should be placed in such a way that the light it emits falls on the side of the separation matrix, through the frame and through the inner frame, where sample migration can be visualised. For example, the direction of the light may be perpendicular to the plane of the separation matrix corresponding to sample migration.

The light source preferably emits light which is suitable for monitoring sample migration. The skilled person knows which type of light is useful depending on which kind of separation is run, and/or depending on the type of dye/stain or marker used for visualisation. Examples of suitable lights include UV light, blue light and laser. Imaging equipment may comprise one or more cameras, placed in such a manner around the assembly that monitoring is possible.

The detection means may also comprise or be supplemented by analysis means, which can be connected to the detection means. Such analysis means may be a computer or another automated system, for example a smartphone or a tablet, which can collect data from the detection means and provide an output to the user - such output may give valuable information as to the progress of migration.

### Recovering the molecules of interest

In some embodiments, the method further comprises a step of extracting the molecules of interest from the separation matrix. Thanks to the continuous monitoring of migration, it is easy to determine when the molecules of interest have migrated sufficiently that they are separated from unwanted molecules in the separation matrix. The desired molecules can then be extracted from the separation matrix. This can be done either while the assembly is in the second configuration, or the frame or the inner frame comprising the separation matrix from which the molecules are to be recovered can be removed from the assembly prior to extracting the molecules.

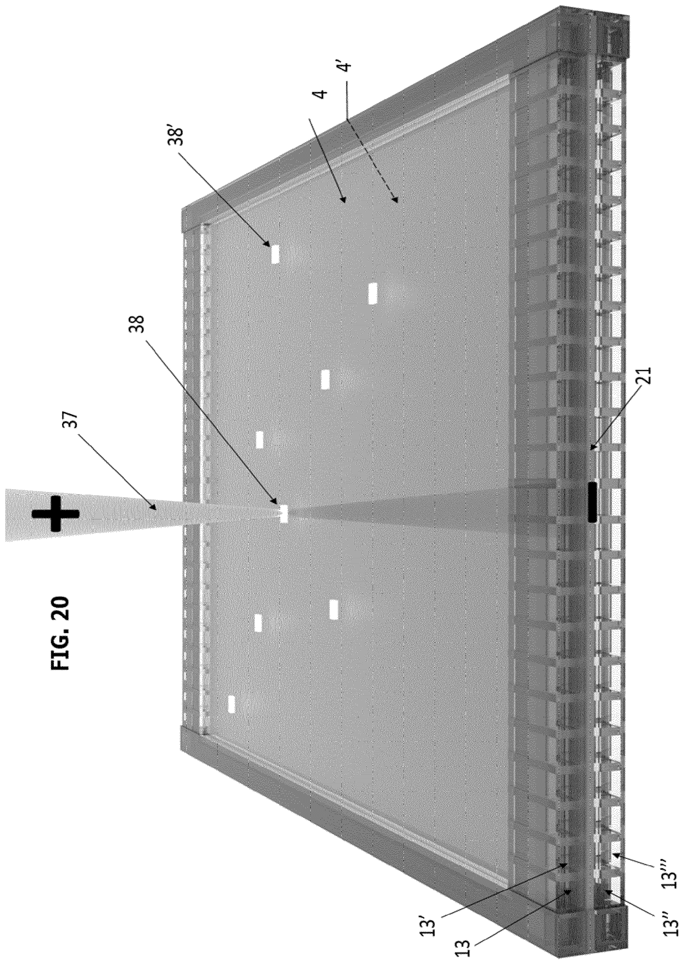

In practice, one or more pieces of the separation matrix, which is suspected of containing the molecules of interest, are cut with cutting means such as a tip (37), as exemplified in Figure 20. Such cutting means can be in the form of a scalpel or other cutting device, for example a pipette tip. In some embodiments, the pipette tip has a square end, a rectangular end or a circular end. The extraction can be guided by an automated system. The pieces of separation matrix can then be placed in a container or in a collection reservoir, or in any of the openings provided in the assembly.

In such embodiments, it can be useful to assist extraction as follows. The assembly may comprise a conductive sheet or plate which can function as electrode, and with dimensions such that it covers (and is in contact with) at least the portion of the separation matrix where the molecules of interest are located. This electrode plate is unpowered, i.e. uncharged, during electrophoresis. Once electrophoresis is complete, conductive cutting means can be employed to cut the relevant area of the separation matrix. For example, a conductive tip made of or comprising a conductive material such as metal can be used, which can function as another electrode. Once the tip is positioned in the right place, a current can be applied to the electrode plate, having the same charge as the molecules of interest, and to the tip, having then a charge of opposite sign compared to the molecules of interest. In this way, migration of the molecules of interest to the tip is facilitated. The tip, to the surface of which the charged molecules of interest are now attached, can then be placed in a container or a collection reservoir or an opening, and the current can either be interrupted or reversed in order to release the charged molecules from the tip into the container, collection reservoir or opening. The latter preferably contains a solution, for example an electrophoresis buffer or an elution buffer, in which the molecules of interest can be released.

In some embodiments, the inner frame comprises two separation matrices. In such cases, the inner frame may be provided with blocking means, which can here aptly be an electrode plate or sheet between the two separation matrices, and recovery can be performed from a lateral side of either separation matrix.

In embodiments where the separation matrix is protected with a sheet which can be peeled, cut, removed or pierced, the sheet is removed or ruptured prior to extraction.

Methods suitable for recovering charged molecules from a piece of separation matrix, for example from a gel such as an agarose gel, are known in the art. The method described in WO 2020/079220 can also be used. Such method is also compatible with SBS formats and/or SLAS standards.

### Electroblotting

In some embodiments, it may be desirable to perform electroblotting once the molecules of interest have been separated from the remaining molecules in the samples by electrophoresis. When this is desirable, the electrophoresis assembly is preferably such that the separation matrix can become directly accessible from a lateral side of the assembly, at least when the assembly is in the second configuration. In embodiments where the lateral sides of the inner cavity of the inner frame and/or the frame cavity are covered with a sheet as described above, the sheet is peeled off, cut, removed or ruptured prior to performing electroblotting, i.e. prior to placing an electroblotting membrane in contact with the separation matrix.

Thus herein is also provided a method for performing electroblotting, comprising the steps of:
i) performing the method of electrophoresis as described herein above,
ii) contacting the separation matrix (4) comprising molecules of interest with an electroblotting membrane, and
iii) transferring the molecules of interest from the separation matrix to the electroblotting membrane by applying an electrical field having a direction perpendicular to the direction of the separation matrix and of the electroblotting membrane.

Electroblotting is performed by transferring molecules from a separation matrix suspected of containing the molecules of interest to a membrane such as an electroblotting membrane. This may require another pair of electrodes (herein also termed electroblotting pair of electrodes) located on each side of the separation matrix, where said electroblotting pair of electrodes can generate an electrical field (herein termed electroblotting field) in a direction perpendicular to the electrical field generated in connection with electrophoresis. This allows transfer of the molecules, including the molecules of interest, from the separation matrix to the membrane. Alternatively, the separation matrix or matrices comprising or suspected of comprising molecules of interest can be removed from the electrophoresis assembly, and transferred to an electroblotting apparatus as is known in the art.

In some embodiments, particularly where it is desirable to perform electroblotting, the inner frame can be provided with an electrode such as an electrode plate, having dimensions such that it covers at least the portion of the separation matrix where the molecules of interest to be transferred to an electroblotting membrane are located. This electrode plate is unpowered, i.e. uncharged, during electrophoresis. This electrode plate can also be the conductive blocking means that separates the two inner frames. Once electrophoresis is complete, an electroblotting membrane is laid on the lateral surface of the separation matrix, and another electrode is placed on the membrane, so that the membrane now is in contact with the separation matrix on one side, and with the other electrode on the other side, in a sandwich fashion. The other electrode can advantageously also be in the form of an electrode plate covering at least the portion of the separation matrix where the molecules of interest to be transferred to the electroblotting membrane are located. A current is then applied to the electroblotting electrodes, so that the electrode directly in contact with the separation matrix has the same charge as the molecules of interest to be transferred to the membrane, and the other electrode, which is in contact with the membrane, has a charge opposite the charge of the molecules of interest, which will then migrate toward said other electrode onto the membrane.

Electroblotting methods are known in the art and involve various types of membranes, which are generally determined by the type of molecules to be transferred thereto. In embodiments where the molecules are proteins, the electroblotting is a Western blot, and the membrane is preferably a nitrocellulose membrane, a nylon membrane or a polyvinylidene difluoride membrane. The electroblotting may also be a Far-Western blot, typically to study protein-protein interactions, or an Eastern blotting, typically to study post-translational modifications.

In embodiments where the molecules are nucleic acid molecules such as DNA molecules or RNA molecules, the membrane is aptly selected from a nitrocellulose membrane, a polyvinylidene difluoride membrane, a filter paper membrane or a nylon membrane. DNA molecules can be transferred by Southern blot, and RNA molecules by Northern blot or reverse Northern blot, as is known in the art.

In embodiments where the molecules are e.g. glycoplipids, Far-Eastern blots are typically used.

During or after transfer, the molecules may be marked as is known in the art, in order to enable proper analysis of the membrane. Accordingly, in some embodiments, the method further comprises a step of analysing the membrane after transfer. Analysis of the membrane may comprise one or more of: detection of the presence of the molecules of interest, lack of detection of the presence of the molecules of interest, quantification of the amount of the molecules of interest, for example by Western blot, Southern blot or Northern blot.

### Examples

In the below, particular exemplary embodiments of the assembly, system and methods of the present disclosure are described.

**Figure 1** shows an embodiment of an inner frame (3) which can be used in the electrophoresis assembly of the present disclosure. The inner frame is of dimensions such that it can accommodate a separation matrix such as a gel in the inner chamber (5). The inner chamber (5) is defined by lateral walls which allow optical access to the inner part of the inner chamber, here shown as transparent walls, as well as by an upper wall (27) in the upper end of the inner chamber and by a supporting layer (11) in the lower end of the inner chamber. The inner chamber (5) further comprises a buffer chamber (6), which is configured to receive and hold a buffer solution. The buffer chamber (6) is here shown as consisting of an upper compartment (7), located at the upper end of the inner chamber (5); a lower compartment (8) located at the lower end of the inner chamber (5); and in this particular embodiment a lateral compartment (9) which is in fluid communication with the upper compartment (7) and the lower compartment (8).

The supporting layer (11) may rest on a lower wall (39) of the inner chamber, said lower wall comprising openings. The upper wall (27) of the inner chamber (5) comprises a first plurality of openings (10, 10'), in this embodiment of a cylindrical shape, which are defined by a lateral wall protruding in the upper compartment (7) and in the inner chamber (5).

The inner frame (3) is further defined by an upper wall (26) comprising a second plurality of openings (13, 13'), and a lower wall (34) comprising a third plurality of openings (31, 31'). The first plurality of openings (10, 10'), the second plurality of openings (13, 13') and the third plurality of openings (31, 31') all match each other.

The inner frame (3) is shown here as comprising means to connect (28) to electrodes so that electrophoresis can be performed. In this embodiment, the inner frame (3) further comprises a pierceable, fluid-tight bottom layer (12) in its lower end. This layer ensures that when the lower compartment (8) contains a buffer solution, no leakage occurs. The inner frame (3) here also comprises a pierceable seal (14) covering the second plurality of openings (13, 13').

**Figure 2** shows the inner frame (3) of Figure 1, ready to be inserted in a frame. A separation matrix (4), here a gel, has been introduced in molten form through the first plurality of openings (10, 10') into the inner chamber (5). The buffer chamber, here consisting of an upper compartment (7), a lower compartment (8) and a lateral compartment (9) which are in fluid communication with one another, has been filled with a buffer solution suitable for performing electrophoresis.

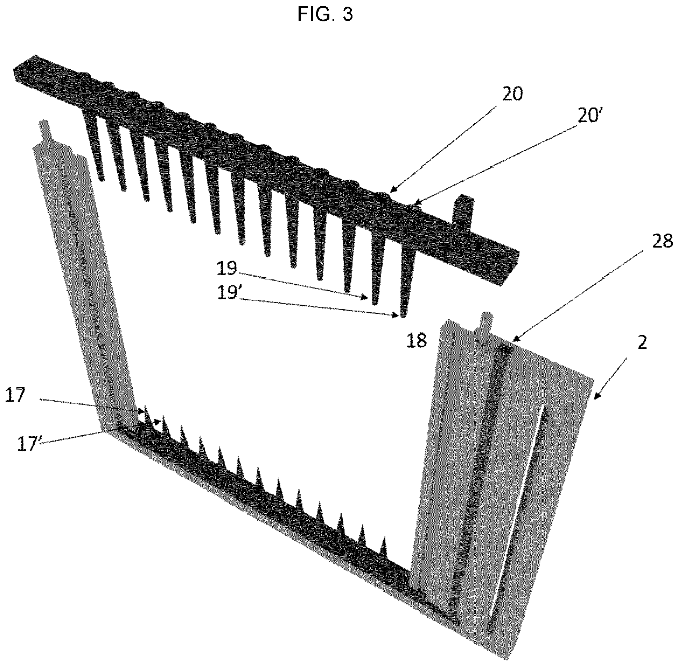

Referring now to **Figure 3**, a frame (2) is shown in exploded view, said frame having an opening (18) in its upper end through which an inner frame (not shown) can be inserted. The frame (2) comprises a first plurality of first piercing elements (17, 17') in its lower part. A second plurality of second piercing elements (19, 19') is provided, which can be fixed on the sides of the frame (2). The second piercing elements (19, 19') are here provided with loading channels (20, 20'), which are hollow. The frame (2) further comprises means (28) to connect to electrodes.

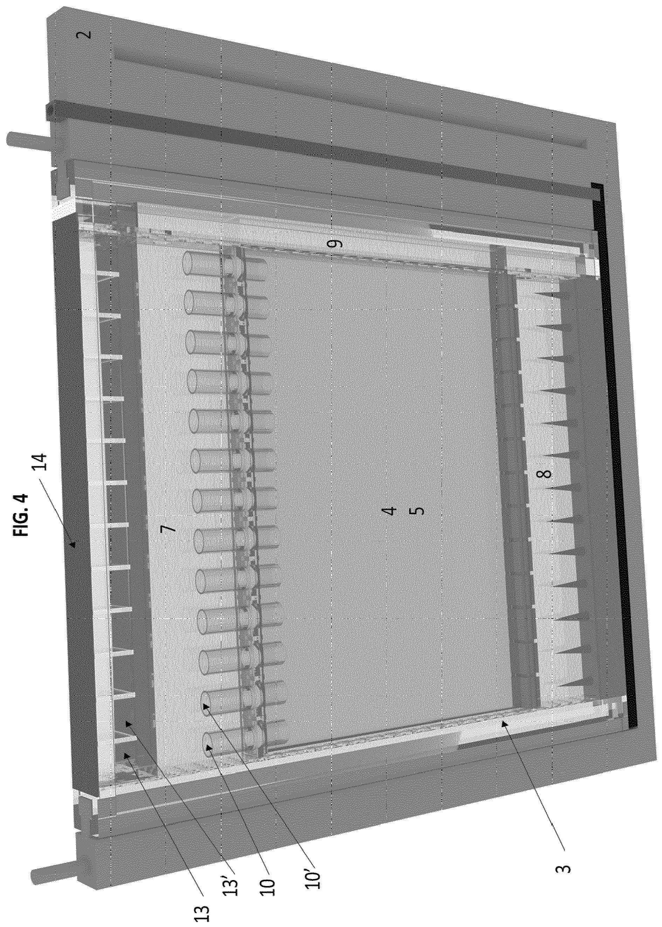

**Figure 4** shows the frame (2) of Figure 3, in which the inner frame (3) of Figures 1 and 2 has been inserted. The inner frame now contains a separation matrix in the form of a gel (4). The lower, upper and lateral compartments (8, 7, 9) which constitute the buffer chamber have been filled with electrophoresis buffer, and the inner frame (3) is closed with the pierceable seal (14) which covers the second plurality of openings (13, 13') to prevent leakage. The first plurality of openings (10, 10') establishes fluid communication between the upper compartment (7) of the buffer chamber and the inner chamber (5).

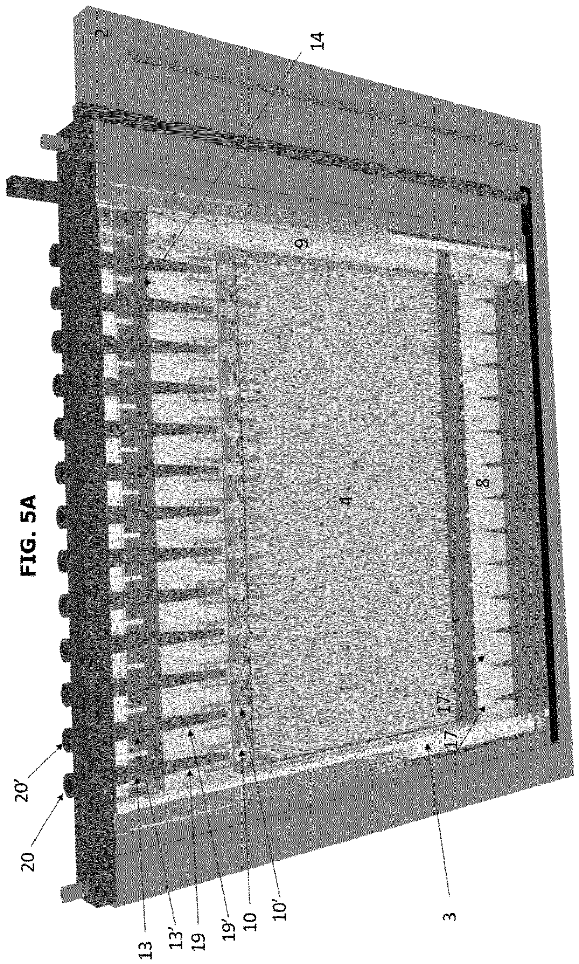

As shown in **Figure 5A**, after insertion of the inner frame (3) in the frame (2), the second piercing elements (19, 19') are fixed onto the frame (2). In practice, the second piercing elements rupture the pierceable seal (14) and go through the second plurality of openings (13, 13') and into the first plurality of openings (10, 10'), so that when samples are loaded in the loading channels (20, 20'), they are effectively introduced in the first plurality of openings (10, 10'). The first piercing elements (17, 17'), upon insertion of the inner frame (3) into the frame (2), go through the bottom layer (12) and are in contact with the buffer in the lower compartment (8), but in this embodiment are not in contact with the inner chamber (5).

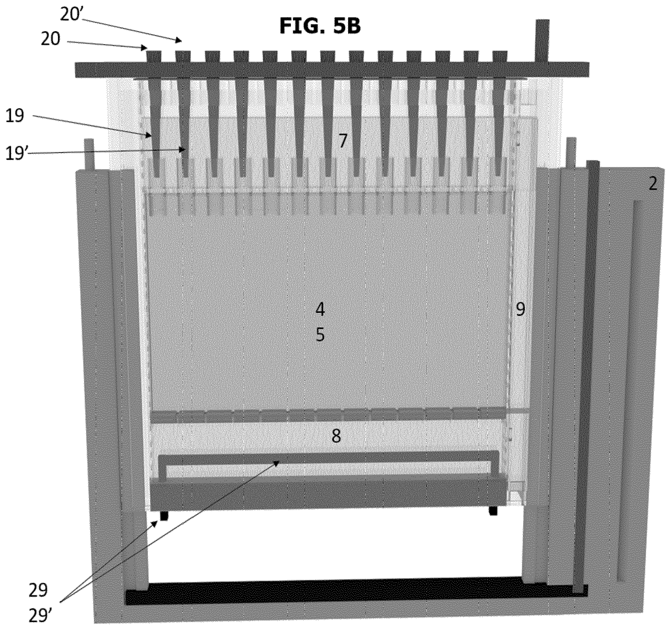

**Figure 5B** shows an exploded view of the frame (2) and inner frame (3) from figure 5A where the first piercing elements are replaced with an embedded electrode in the bottom of the inner frame (3).

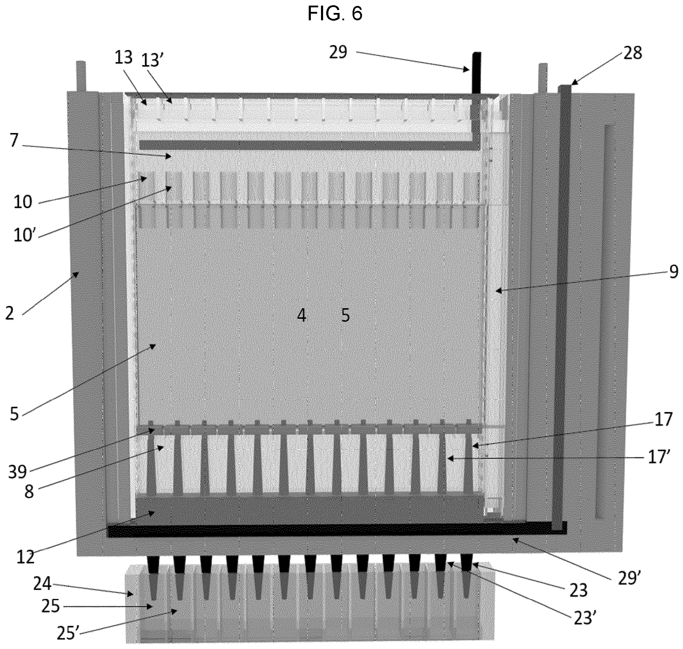

**Figure 6** shows another embodiment of the frame (2), where the first piercing elements (17, 17') also comprise outer channels (23, 23') which extend outside the frame (2) when fixed thereon. In this embodiment, the first piercing elements (17, 17') are long enough to not only go through the bottom layer (12), but also to be in contact with the separation matrix (4) in the inner chamber (5) through the openings in the lower wall (39). The frame (2) comprises means (28) to connect to an electrode, thereby allowing an electrical current to be applied to the outer channels (23, 23') since the first piercing elements are made at least partly of a conductive material; the outer channels thus act as negative electrodes. In this particular embodiment, a positive electrode (29) is arranged in the upper compartment (7) of the buffer chamber.

A first sample reservoir (24) is provided, which has wells (25, 25') comprising samples to be analysed by electrophoresis. The wells are spaced in such a way that they match the spacing between the first piercing elements (17, 17'), and in particular match the outer channels (23, 23'). In this particular embodiment, the molecules of interest contained within the samples have a negative charge. Application of an electrical current to the first piercing elements and hence to the outer channels (23, 23'), so that these now have a negative charge, results in the molecules of interest migrating upwards via the outer channels (23, 23') and continue towards the upper positive electrode (29). Such an embodiment thus alleviates the need to load the samples in the outer channels (23, 23') by means of a pipette or liquid handler.

Alternatively, the molecules of interest contained within the samples have a positive charge. Application of an electrical current to the first piercing elements and hence to the outer channels (23, 23') so that these now have a negative charge results in the molecules of interest migrating to the outer channels (23, 23'). Such an embodiment thus alleviates the need to load the samples in the outer channels (23, 23') by means of a pipette or liquid handler. Once the samples have migrated to the outer channels (23, 23'), the frame (2) is lifted to interrupt the contact between the wells (25, 25') and the outer channels (23, 23'). The electrophoresis procedure as such can then commence, and is in practice performed by reverting the current so that the outer channels (23, 23') now have a positive charge, and the electrode (29) now has a negative charge - thereby allowing migration of the samples through the separation matrix towards the negative electrode (29). The pierceable seal (14), which is fluid-tight, allows the user to turn the frame upside down if convenient.

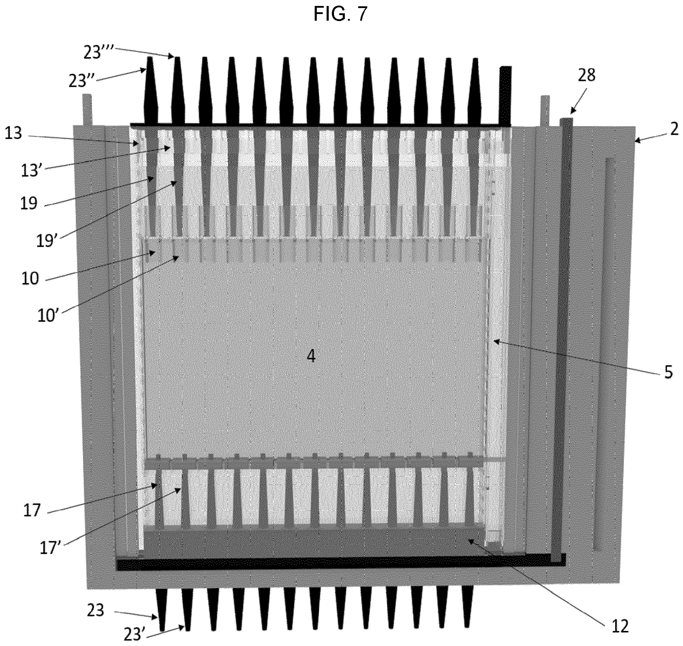

**Figure 7** shows yet an embodiment of the present disclosure. Here, similar to the embodiment of Figure 6, the first piercing elements (17, 17') also comprise outer channels (23, 23') which extend outside the frame (2) when fixed thereon. In this embodiment, the first piercing elements (17, 17') are long enough to not only go through the bottom layer (12), but also to be in contact with the separation matrix (4) in the inner chamber (5) through the openings in the lower wall (39). The second piercing elements (19, 19') also comprise outer channels (23", 23'") which extend outside the frame (2) when fixed thereon. The second piercing elements (19, 19') are long enough to go through the pierceable seal (14), through the second plurality of openings (13, 13') and to be inserted in the first plurality of openings (10, 10'), and can as shown here come in contact with the separation matrix (4).

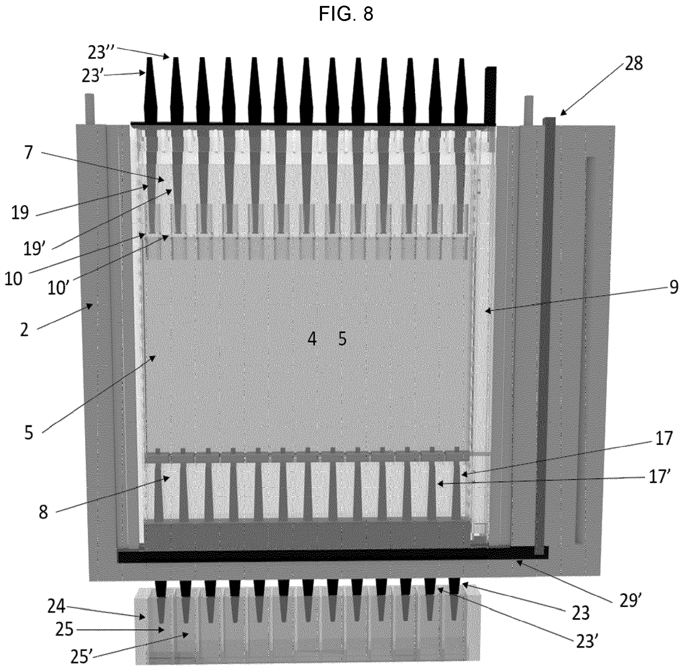

**Figure 8** shows the frame (2) of Figure 7. Similar to the situation depicted for Figure 6, a first sample reservoir (24) is provided, which has wells (25, 25') comprising samples to be analysed by electrophoresis. The wells are spaced in such a way that they match the spacing between the first piercing elements (17, 17'), and in particular match the outer channels (23, 23') of the first piercing elements.

After the molecules of interest, which have for example a positive charge, have migrated to the outer channels (23, 23') of the first piercing elements (17, 17'), the frame (2) can be turned upside down, and the outer channels (23", 23'") of the second piercing elements (19, 19') can be inserted in the first sample reservoir (24). This allows another type of molecules of interest comprised within the samples, having an opposite charge to the molecules of interest now attached to the outer channels (23, 23') of the first piercing elements (17, 17'), to migrate to the outer channels (23", 23'") of the second piercing elements (19, 19'). Electrophoresis can then start, and can be performed by reverting the current so that the outer channels (23, 23') of the first piercing elements (17, 17') now have a positive charge, and the outer channels (23", 23'") of the second piercing elements (19, 19') now have a negative charge. The molecules attached to the outer channels will then be pushed away from the piercing elements, and will begin migrating to the other end of the separation matrix (4). Migration can be monitored so that the two sets of molecules of interest, having different charges, do not migrate so far that they get intermixed in the separation matrix (4).

Alternatively, after the molecules of interest, which have for example a negative charge, have migrated upwards via the outer channels (23, 23') towards the upper positive electrode and entered the separation matrix, the frame (2) can be turned upside down, and the outer channels (23", 23"') of the second piercing elements (19, 19') can be inserted in the first sample reservoir (24). This allows another group of molecules of interest comprised within the samples, having an opposite charge to the molecules of interest now already entered in the separation matrix via outer channels (23, 23') of the first piercing elements (17, 17'), to migrate upwards via the outer channels (23", 23'") of the second piercing elements (19, 19'). Once both groups of molecules have entered the separation matrix, sample reservoir is removed and electrophoreses continue. Migration can be monitored so that the two groups of molecules of interest, having different charges, do not migrate so far that they get intermixed in the separation matrix (4).

**Figure 9** shows a frame (2) comprising an inner frame (3) with a separation matrix (4) in the inner chamber (5). In this embodiment, an upper electrode (29) is provided in the upper compartment (7) of the buffer chamber which also comprises a lateral compartment (9) and a lower compartment (8). The assembly here comprises a first plurality of first piercing elements (17,17') in the lower end, with outer channels (23, 23') protruding out of the frame. The first piercing elements go through the fluid-tight bottom layer (12). The first piercing elements are electrically connected to another electrode (29') shown here just under the fluid-tight bottom layer. The outer channels are electrically connected to a third electrode (29") located just under the second electrode (29'). The frame (2) comprises means to connect the electrodes (28) to power.

A sample reservoir (24) is provided, comprising twelve wells (25, 25') matching one dimension of a 96-well SBS format. The wells comprise a volume of samples comprising molecules of interest. In this particular embodiment, the samples comprise whole cells.

Electric pulses can be applied to the samples in the wells when power is supplied to the third electrode. This results in cell lysis, thus releasing the molecules of interest from the cells, broth or biomass constituting the samples.

Once lysis is achieved, the third electrode (29") is switched off. The first electrode (29) and the second electrode (29') can then be turned on, and electrophoretic migration can start.

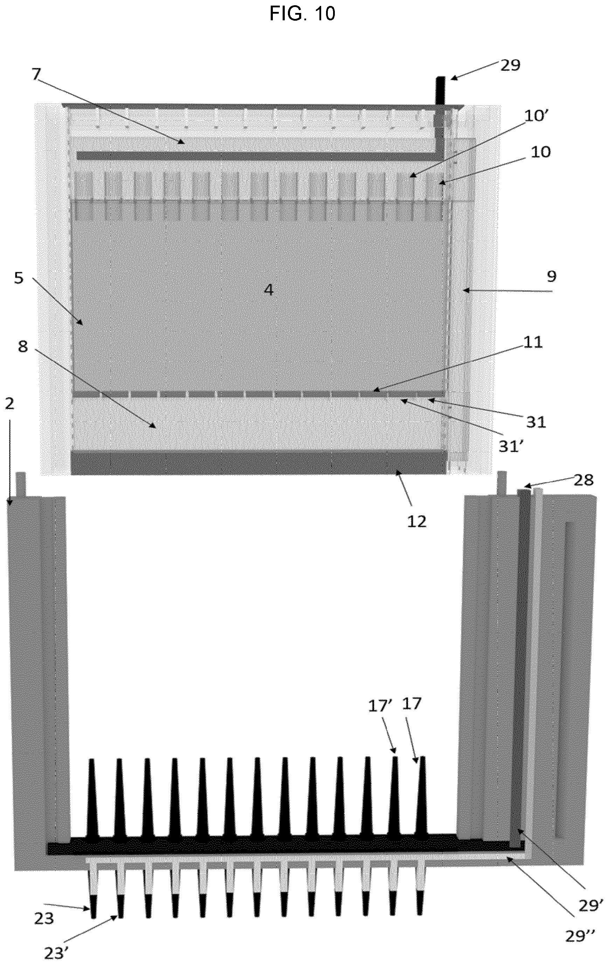

**Figure 10** shows an exploded view of the frame and inner frame of Figure 9.

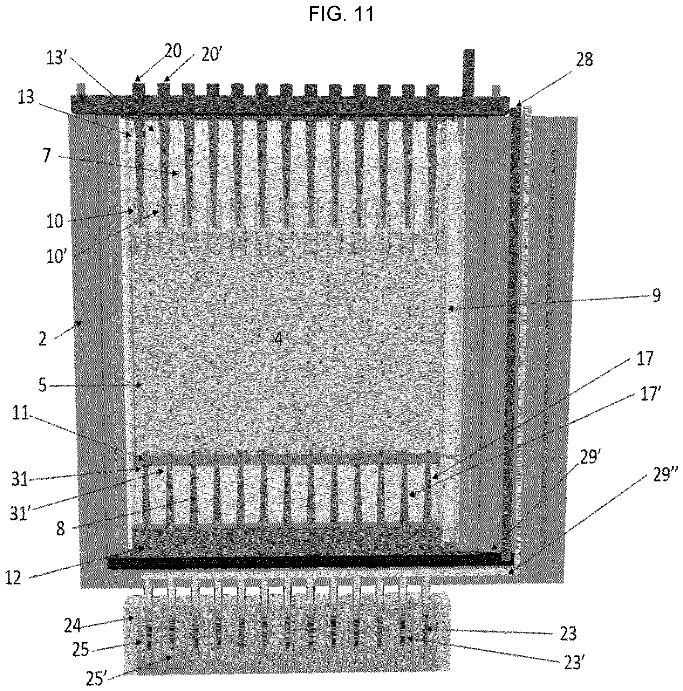

**Figure 11** shows an alternative embodiment which, similar to the embodiment of Figures 9 and 10, can also be used to perform lysis of the samples. A second plurality of second piercing elements (19, 19') is here provided in the upper part of the frame. They can be partially inserted in the first plurality of openings (10, 10'). The second piercing elements comprise loading channels (20, 20') and are connected to an upper electrode (29).

The second piercing elements can be used to load another set of samples which are introduced in the loading channels, or they can be used to collect the molecules of interest originating from the samples in the sample reservoir (24) once they exit the separation matrix on the upper end. In practice, this is achieved by turning off the power provided to the electrodes (29, 29') to interrupt migration once the molecules of interest exit the upper end of the separation matrix. The samples can then easily be collected from the first plurality of openings (10, 10'), for example with a pipette tip. Since the layout of the whole assembly matches an SBS format, the samples can easily be transferred to e.g. a suitable SBS well plate, for example a 96-well plate in an assembly comprising eight frames with 12 lanes each. In the case where different molecules having different sizes reach the first plurality of openings (10, 10') at different times, the continuous monitorability will trigger molecule collection each time a specific group of molecules reaches its respective first plurality of openings (10, 10'),

**Figure 12** shows an embodiment of an electrophoresis assembly (1) of the present disclosure. The electrophoresis assembly comprises here eight frames (2) connected via an external slidable connection (16), here a ring or cylinder on which each frame is attached. The assembly is here shown in the first configuration, where the frames abut each other in a longitudinal direction. The eight frames, which each comprise 12 openings so that electrophoresis can be performed on 12 lanes, thus match a 96-well SBS format in the first configuration. This enables the use of a robot liquid handler (32) to load the samples into the loading channels (20, 20') of the second piercing elements. The second piercing elements (19, 19') are connected to an electrode (29), while the first piercing elements (17, 17') are connected to an electrode of opposite charge (29') via the connecting means (28) of the frame (2).

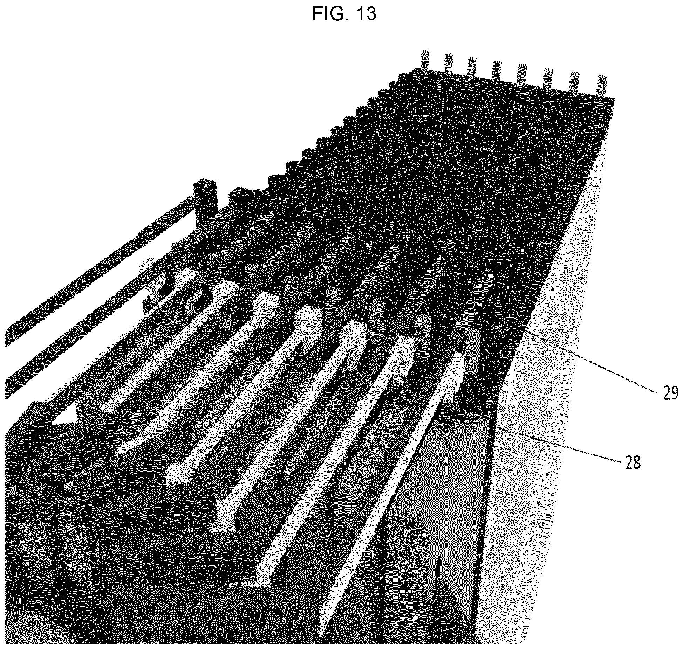

**Figure 13** shows how the electrodes (29, 29') can connect to the connecting means (28) and to the second piercing elements via the connecting means (28').

**Figure 14** shows the electrophoresis assembly of Figure 12 while electrophoresis is being performed. Each frame can be slid along the external slidable connection (16), and thus become accessible for optical monitoring by optical detection means, here two cameras (31), while electrophoretic separation is progressing.

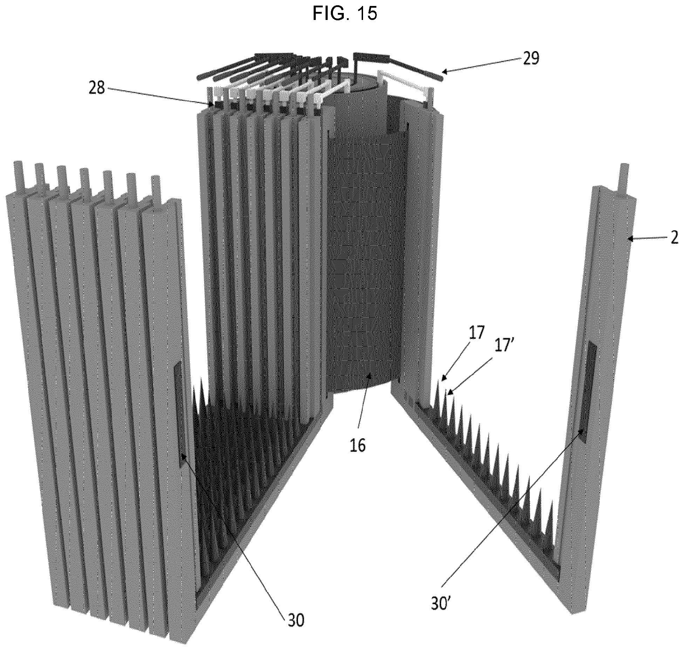

**Figure 15** shows a partial view of the electrophoresis assembly of Figure 12, here shown without the inner frames, and here shown in the second configuration, where seven frames (2) abut each other in a longitudinal direction, while one frame is accessible for optical monitoring. The frames are connected via an external slidable connection (16), along which each frame can slide. The frames are equipped with magnets (30, 30'), which help maintain the electrophoresis assembly in the first configuration.

**Figure 16** shows another embodiment of an electrophoresis assembly of the present disclosure. When in the first configuration as shown, the eight frames (2), comprising each 12 openings and 12 loading channels (20, 20') match a 96-well SBS standard. A liquid handler (32) can thus be used to introduce samples in the loading channels (20, 20'). An electrical current is applied to the frames via the connecting means (28) which are connected to electrodes (29, 29').

**Figure 17** shows the electrophoresis assembly of Figure 16 in a second configuration, where not all frames abut each other in a longitudinal direction. The frame to be monitored via the detection means, here two cameras (40, 40'), can be slid outwards so that optical access to the separation matrix is possible. After image capture, the frame is slid back, and another frame can be slid out for imaging.

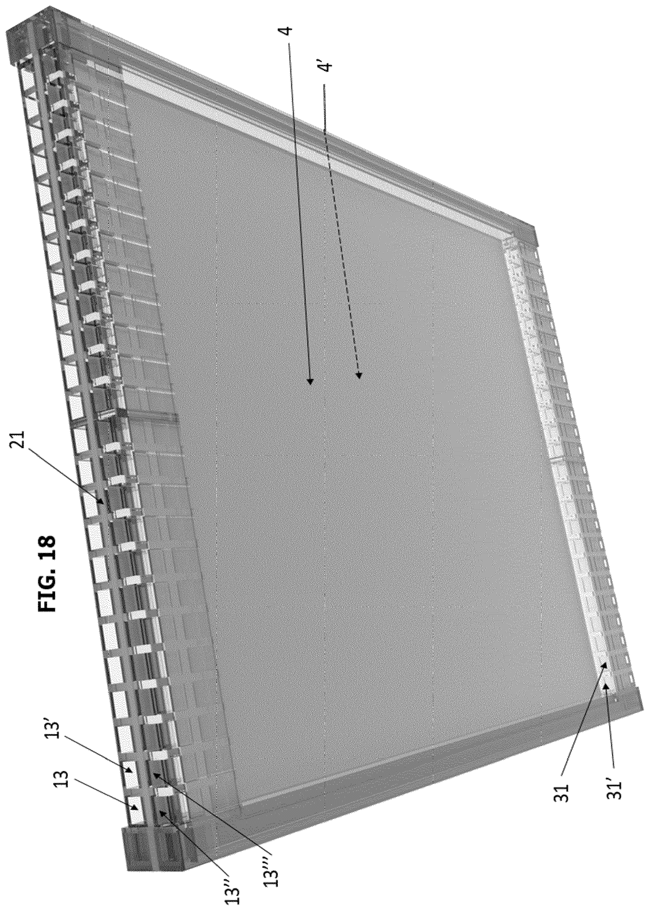

**Figure 18** shows an inner chamber configured to hold two separation matrices (4, 4'). A non-transparent barrier (21) is provided between the two separation matrices, so that optical monitoring is possible for each of the separation matrices from a lateral side of a frame holding an inner frame with the inner chamber shown in the figure, without interference from the other separation matrix.

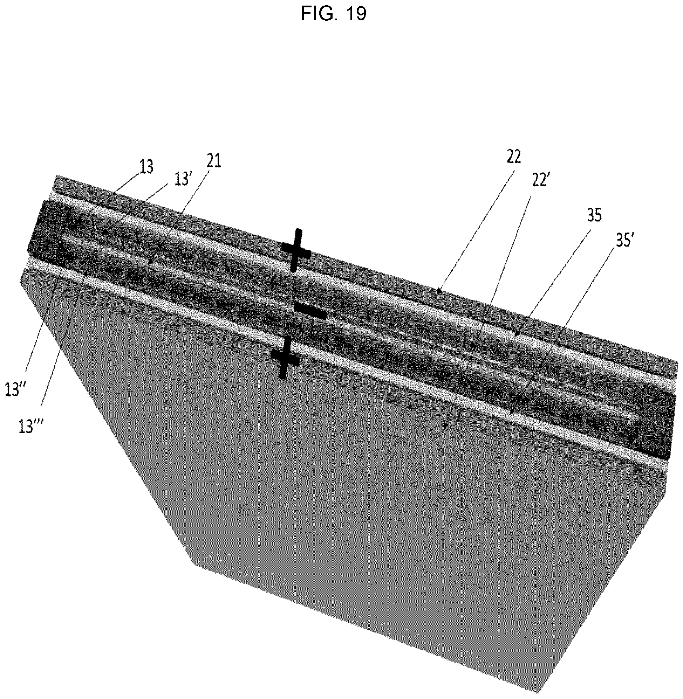

**Figure 19** shows a top view of the inner chamber of Figure 18, flanked by electroblotting membranes (35, 35') and by electroblotting electrodes (22, 22'). The non-transparent barrier (21) is made of a conductive material, and can thus function as an electrode (shown here as a negative electrode). After electrophoresis, the assembly is arranged in the second configuration before performing electroblotting. Alternatively, the inner frame can be removed from the assembly, and electroblotting can be performed on each inner frame individually. An electroblotting membrane (35, 35') can be placed on one side of each of the two separation matrices (4, 4'), and another electroblotting electrode (22, 22') of a charge opposite the charge of the electrode (21) (the electroblotting electrodes (22, 22') are here shown with a positive charge) can be used to transfer the molecules of interest from the separation matrix to the electroblotting membrane (35, 35'). The electroblotting electrodes (22, 22') also have a charge opposite to the charge of the molecules of interest that it is desirable to transfer to the electroblotting membrane. The electroblotting electrodes can be in the form of a plate or a sheet made of conductive material and connected to a power supply. Detection of the molecules of interest after transfer to the membrane can then be performed as is known in the art.

**Figure 21** shows how the inner frame of Figure 18 can be used to easily collect molecules of interest from the separation matrix. The separation matrix (4) now comprises groups of separated molecules of interest (38, 38'). A tip (37) can be used to pick up the separated molecules of interest. The tip may be a conventional pipette tip, or it may be a conductive tip, e.g. made of a conductive material such as metal, which can incise the separation matrix around the molecules of interest. These can then be aspired within the tip, and transferred for example to a collection reservoir (not shown) for further analysis. In embodiments where a conductive tip is used, a current may be applied to the tip having a charge opposite the charge of the molecules of interest, whereby the molecules of interest migrate to the tip. These can then be transferred to a collection reservoir. In practice, this is done by placing the tip in a conductive solution comprised within the collection reservoir and either interrupting the current and/or resuspending the molecules in solution, or inverting the current so that the molecules of interest are submitted to repulsive actions.

### Items

1. An electrophoresis assembly (1), comprising two or more frames (2), each frame having an opening (18) in an upper end and each frame being configured for holding at least one inner frame (3),
   wherein the inner frame is configured for holding at least one separation matrix such as a gel (4), and wherein the inner frame comprises:
   - an inner chamber (5) configured for receiving the separation matrix, said inner chamber being defined by lateral walls allowing optical access to the inner part of the inner chamber, by an upper wall (27) in an upper end of the inner chamber, and by a lower wall (39) and optionally a supporting layer (11) resting on said lower wall,
   - a buffer chamber (6) configured for receiving a buffer solution, said buffer chamber comprising at least an upper compartment (7) located at an upper end of the inner chamber and a lower compartment (8) located at a lower end of the inner chamber, and optionally further comprising a lateral compartment (9) in fluid communication with the upper compartment and the lower compartment,
   - an upper wall (26) comprising a second plurality of openings (13, 13'),
   - a lower wall (34) comprising a third plurality of openings (31, 31'),
   - a set of electrodes consisting of one or more first electrodes (29) and one or more second electrodes (29') and optionally one or more third electrodes (29"), or means to connect (28) to a set of electrodes consisting of one or more first electrodes and one or more second electrodes;
      wherein the upper wall (27) of the inner chamber comprises a first plurality of openings (10, 10') being defined by a lateral wall which protrudes in the upper compartment and optionally in the inner chamber, and wherein:
      a) each frame comprises a hinge or an internal slidable connection, wherein the two or more frames are pivotably hinged to one another via said hinge or wherein the two or more frames are connected to one another via said internal slidable connection, and/or
      b) the assembly comprises an external slidable connection (16), wherein the two or more frames are releasably connected to one another via said external slidable connection,
      such that in a first configuration the two or more frames abut each other in a longitudinal direction, and in a second configuration the two or more frames do not abut each other in a longitudinal direction while still connected to one another via said hinge or internal slidable connection or via said external slidable connection,
      and wherein said first and second plurality of openings are arranged to match each other and to match an SBS format and/or an SLAS standard at least when the assembly is in the first configuration.
2. The assembly according to item 1, wherein each frame comprises an internal slidable connection, preferably on a lateral surface, more preferably on an upper portion and/or a lower portion of the lateral surface.
3. The assembly according to item 2, wherein the internal slidable connection is selected from the group consisting of one or more ridges and/or one or more magnets.
4. The assembly according to any one of the preceding items, wherein the assembly comprises a external slidable connection such as a ring or a hollow cylinder to which the two or more frames are attached.
5. The assembly according to any one of the preceding items, wherein the two or more frames are in extension of each other in the second configuration.
6. The assembly according to any one of the preceding items, wherein the standard SBS format and/or the SLAS standard is a 6-well format, a 12-well format, a 24-well format, a 48-well format, a 96-well format, a 384-well format, a 1536-well format, a 3456-well format or a 9600-well format.
7. The assembly according to any one of the preceding items, wherein the two or more frames all have the same dimensions.
8. The assembly according to any one of the preceding items, wherein the inner frames all have the same dimensions.
9. The assembly according to any one of the preceding items, wherein the inner frame comprises at least one separation matrix such as a gel.
10. The assembly according to any one of the preceding items, wherein each frame can receive at least one inner frame through the opening (18).
11. The assembly according to any one of the preceding items, wherein the inner chambers do not comprise buffer.
12. The assembly according to any one of the preceding items, wherein at least one lateral surface of the two or more frames is hollow, thereby defining a frame cavity, or wherein the two or more frames comprise a transparent lateral surface, thereby allowing optical access to the inner frame held in the assembly at least when the assembly is in the second configuration.
13. The assembly according to any one of the preceding items, wherein at least one lateral side of the inner frames is hollow, thereby defining an inner cavity, or wherein the inner frames are made of a material allowing optical access through their lateral side, thereby enabling optical access to the separation matrix held therein at least when the assembly is in the second configuration.
14. The assembly according to any one of the preceding items, wherein at least the lateral sides of the inner frame and/or of the frame consists of a material which allows transmission of light, such as UV light, laser light or blue light.
15. The assembly according to any one of the preceding items, wherein at least the lateral sides of the inner frame and/or of the frame are covered with a peelable, removable, cuttable or pierceable sheet.
16. The assembly according to any one of the preceding items, wherein the two frames located in the extreme positions of the assembly when in the first configuration can be connected to one another such that the assembly forms a closed perimeter.
17. The assembly according to any one of the preceding items, wherein the two or more frames further comprise additional connection means such as magnets (30, 30'), configured to facilitate maintaining the assembly in the first configuration.
18. The assembly according to any one of the preceding items, wherein the two or more frames are manufactured of an inert, UV-resistant material such as plastic or metal.
19. The assembly according to any one of the preceding items, wherein the inner frame further comprises a pierceable, fluid-tight bottom layer (12) in its lower end.
20. The assembly according to any one of the preceding items, wherein a first plurality of first piercing elements (17, 17') is provided in the lower part of the frame, each of said first piercing elements being configured to penetrate the supporting layer and optionally the pierceable, fluid-tight bottom layer when the inner frame is inserted in the frame, so that the first piercing elements are partially or completely inserted in the lower compartment and optionally so that the first piercing elements are partially or completely inserted in the inner chamber through the third plurality of openings.
21. The assembly according to item 20, wherein the first plurality of first piercing elements comprises or consists of the one or more first electrodes, or wherein the first plurality of first piercing elements is in electrical connection with the one or more first electrodes.
22. The assembly according to any one of the preceding items, wherein a second plurality of second piercing elements (19, 19') is provided in the upper part of the frame, each of said second piercing elements being configured to be partially inserted in the first plurality of openings.
23. The assembly according to item 22 wherein the inner frame comprises a pierceable seal (14) covering the second plurality of openings.
24. The assembly according to item 23, wherein each of said second piercing elements is configured to penetrate the pierceable seal.
25. The assembly according to any one of items 22 to 24, wherein each of said second piercing elements is configured to allow introduction of a liquid composition therein, whereby the liquid composition can be introduced in the first plurality of openings.
26. The assembly according to any one of items 22 to 25, wherein each of said second piercing elements comprises a loading channel (20, 20').
27. The assembly according to any one of items 22 to 24, wherein the first piercing elements and/or the second piercing elements further comprise outer channels (23, 23', 23", 23'") which extend outside the frame when in contact with the frame, wherein said outer channels are in fluid communication with the loading channels.
28. The assembly according to any one of items 22 to 27, wherein the loading channels and/or the outer channels are provided with removable and/or pierceable capping means, such that the channels are fluid-tight at least prior to use.
29. The assembly according to any one of items 22 to 28, wherein the capping means are selected from the group consisting of: a strip, such as a silicone strip, a layer of separation matrix such as a gel, and a filter such as a 450 nm filter.
30. The assembly according to any one of items 25 to 29, wherein the second piercing elements comprises or consists of the one or more second electrodes, or wherein the second plurality of second piercing elements is in electrical connection with the one or more second electrodes.
31. The assembly according to any one of the preceding items, wherein the outer channels of the first piercing elements and/or of the second piercing elements comprises or consists of one or more third electrodes, or wherein the outer channels are in electrical connection with one or more third electrodes.
32. The electrophoresis assembly according to any one of the preceding items, further comprising at least one sample reservoir, such as two sample reservoirs, said sample reservoir comprising wells and matching said SBS format and/or SLAS format, wherein the wells are configured to hold a volume of sample suspected of comprising the molecules of interest.
33. A method for performing electrophoresis, comprising the steps of:
   i) providing an electrophoresis assembly (1), comprising two or more frames (2), each frame having an opening (18) in an upper end and each frame being configured for holding at least one inner frame (3),
      wherein the inner frame is configured for holding at least one separation matrix such as a gel (4), and wherein the inner frame comprises:
      - an inner chamber (5) configured for receiving the separation matrix, said inner chamber being defined by lateral walls allowing optical access to the inner part of the inner chamber, by an upper wall (27) in an upper end of the inner chamber, and by a lower wall (39) and optionally a supporting layer (11) resting on said lower wall,
      - a buffer chamber (6) configured for receiving a buffer solution, said buffer chamber comprising at least an upper compartment (7) located at an upper end of the inner chamber and a lower compartment (8) located at a lower end of the inner chamber, and optionally further comprising a lateral compartment (9) in fluid communication with the upper compartment and the lower compartment,
      - an upper wall (26) comprising a second plurality of openings (13, 13'),
      - a lower wall (34) comprising a third plurality of openings (31, 31'),
      - a set of electrodes consisting of one or more first electrodes (29) and one or more second electrodes (29') and optionally one or more third electrodes (29"), or means to connect (28) to a set of electrodes consisting of one or more first electrodes and one or more second electrodes;
         wherein the upper wall (27) of the inner chamber comprises a first plurality of openings (10, 10') being defined by a lateral wall which protrudes in the upper compartment and optionally in the inner chamber, and wherein:
         a) each frame comprises a hinge or an internal slidable connection, wherein the two or more frames are pivotably hinged to one another via said hinge or wherein the two or more frames are connected to one another via said internal slidable connection, and/or
         b) the assembly comprises a external slidable connection (16), wherein the two or more frames are releasably connected to one another via said external slidable connection,
         such that in a first configuration the two or more frames abut each other in a longitudinal direction, and in a second configuration the two or more frames do not abut each other in a longitudinal direction while still connected to one another via said hinge or internal slidable connection or via said external slidable connection,
         and wherein said first and second plurality of openings are arranged to match each other and to match an SBS format and/or an SLAS standard at least when the assembly is in the first configuration,
         wherein at least one separation matrix is inserted in the inner frames, and
         wherein a buffer solution is introduced in the buffer chamber,
   ii) arranging the electrophoresis assembly in a first configuration wherein the two or more frames abut each other in a longitudinal direction;
   iii) loading a first plurality of samples comprising molecules of interest into the first plurality of openings;
   iv) optionally, applying a current between the one or more first electrodes and the one or more second electrodes for a duration sufficient to allow the samples of molecules to enter the separation matrix, and further optionally loading a second plurality of samples comprising molecules of interest into the third plurality of openings;
   v) applying a current between the one or more first electrodes and the one or more second electrodes, whereby migration of the samples through the separation matrix is enabled;
   vi) arranging the electrophoresis assembly in a second configuration wherein the two or more frames no longer abut each other in a longitudinal direction, so as to enable optical access to the separation matrix from a lateral side of the frame; and
   vii) monitoring migration of the samples through the separation matrix via optical detection means (40);
   wherein steps iii) to vi) can be performed in any order.
34. The method according to item 33, wherein the electrophoresis assembly is according to any one of items 1 to 31.
35. The method according to any one of items 33 to 34, wherein step iii) is performed with a liquid handler (32), such as an automated liquid handler, such as a pipette or a robot.
36. The method according to any one of items 33 to 35, wherein the at least one separation matrix is inserted in the inner frames in a molten or liquid form, and wherein the method further comprises the step of allowing the separation matrix to solidify prior to step iii).
37. The method according to item 36, wherein the separation matrix is a solid separation matrix inserted in the inner frames in a molten form, and wherein the buffer solution is introduced in the buffer chamber after the separation matrix has solidified.
38. The method according to any one of items 33 to 37, wherein the separation matrix is a gel.
39. The method according to any one of items 33 to 38, wherein the inner chambers do not comprise the buffer solution.
40. The method according to any one of items 33 to 39, wherein the buffer solution is a conductive fluid.
41. The method according to any one of items 33 to 40, wherein at least one lateral surface of the two or more frames is hollow, thereby defining a frame cavity, or wherein the two or more frames comprise a transparent lateral surface, thereby allowing optical access to the inner frame held in the assembly at least when the assembly is in the second configuration.
42. The method according to any one of items 33 to 41, wherein at least one lateral side of the inner frames is hollow, thereby defining an inner cavity, or wherein the inner frames are made of a material allowing optical access through their lateral side, thereby enabling optical access to the separation matrix held therein at least when the assembly is in the second configuration.
43. The method according to any one of items 33 to 42, wherein the inner cavity, the frame cavity and/or the openings on the lateral side of the cassettes consists of a material which allows transmission of light, such as UV light, laser light or blue light.
44. The method according to any one of items 33 to 43, wherein the two frames located in the extreme positions of the assembly when in the first configuration can be connected to one another such that the assembly forms a closed perimeter.
45. The method according to any one of items 33 to 44, wherein a second plurality of second piercing elements (19, 19') is provided in the upper part of the frame, each of said second piercing elements being configured to be partially inserted in the first plurality of openings.
46. The method according to item 45, wherein each of the second piercing elements comprises a loading channel (20, 20').
47. The method according to item 46, wherein the step of loading the samples comprising molecules of interest into the first plurality of openings is performed by loading the samples into the loading channels of the second piercing elements.
48. The method according to any one of items 46 to 47, wherein the second piercing elements comprises or consists of the one or more second electrodes or are connected to the one or more second electrodes.
49. The method according to item 48, wherein the second piercing elements further comprise outer channels (23", 23"') which extend outside the frame when in contact with the frame, wherein said outer channels are in fluid communication with the loading channels.
50. The method according to item 49, wherein the step of loading the samples comprising molecules of interest into the first plurality of openings is performed as follows:
   a) providing a first sample reservoir (24) comprising wells (25, 25') and matching an SBS format and/or an SLAS standard, said wells comprising the samples in solution, said samples comprising the molecules of interest, said molecules of interest having a positive charge or a negative charge;
   b) arranging the electrophoresis assembly such that the outer channels of the first piercing elements are contacted with the samples;
   c) generating a first electrical field in the sample solution by applying a current having a charge opposite to the charge of the molecules of interest to the one or more second electrodes for a duration sufficient to allow at least a portion of the molecules of interest to migrate to the one or more second electrodes and into the separation matrix.
51. The method according to item 50, wherein the sample solution comprises cells comprising or suspected of comprising the molecules of interest, and wherein step c) further comprises a step of applying one or more electric pulses to the first piercing elements, thereby lysing the cells and releasing the molecules of interest from the cells.
52. The method according to any one of items 50 to 51, further comprising step iv) of loading a second plurality of samples comprising molecules of interest into the third plurality of openings.
53. The method according to item 51, wherein step iv) is performed as follows:
   A. providing a second sample reservoir comprising wells and matching an SBS format and/or an SLAS standard, said wells comprising the second plurality of samples in solution, said samples comprising the molecules of interest, said molecules of interest having a positive charge or a negative charge;
   B. arranging the electrophoresis assembly such that the outer channels of the second piercing elements are contacted with the second plurality of samples;
   C. generating a first electrical field in the sample solution by applying a current having a charge opposite to the charge of the molecules of interest of the second plurality of samples to the one or more second electrodes for a duration sufficient to allow at least a portion of the molecules of interest to migrate to the one or more second electrodes and into the separation matrix.
54. The method according to item 53, wherein the molecules of interest of the first plurality of samples and the molecules of interest of the second plurality of samples have opposite charges.
55. The method according to any one of items 33 to 54, wherein the molecules of interest are nucleic acid molecules, such as DNA molecules or RNA molecules, proteins, amino acids, or carbohydrates such as monosaccharides or polysaccharides.
56. The method according to any one of items 33 to 55, wherein the method is performed without immersing the assembly in buffer.
57. The method according to any one of items 33 to 55, further comprising a step viii) of extracting the molecules of interest from the separation matrix.
58. The method according to any one of items 33 to 57, wherein the method further comprises the step of cutting one or more pieces of the separation matrix suspected of containing the molecules of interest with cutting means, preferably wherein the cutting means is a squared-end tip, a rectangular-end tip or a circular-end tip such as a pipette tip.
59. The method according to item 58, wherein the electrophoresis assembly further comprises a conductive sheet covering at least a portion of the separation matrix comprising molecules of interest, and wherein the cutting means are made of a conductive material, wherein the method further comprises the step of applying a current to the cutting means, having a charge opposite the charge of the molecules of interest, and to the conductive sheet, having a charge of the same sign as the charge of the molecules of interest, preferably wherein said current is applied after step vii).
60. The method according to any one of items 57 to 59, further comprising the step of recovering the molecules of interest from the one or more pieces of the separation matrix.
61. The method according to any one of items 33 to 60, wherein step vii) is performed in real time or continuously.
62. A method for performing electroblotting, comprising the steps of:
   i) performing the method of electrophoresis according to any one of items 33 to 61,
   ii) contacting the separation matrix (4) comprising molecules of interest with an electroblotting membrane, and
   iii) transferring the molecules of interest from the separation matrix to the electroblotting membrane by applying an electrical field having a direction perpendicular to the direction of the separation matrix and of the electroblotting membrane.
63. The method according to item 62, wherein the step of transferring the molecules of interest from the separation matrix to the membrane comprises performing capillary transfer and/or applying an electroblotting field in a direction perpendicular to the direction of the membrane.
64. The method according to any one of items 62 to 63, wherein the molecules are proteins and the membrane is suitable for performing a Western blot, such as a nitrocellulose membrane, a nylon membrane or a polyvinylidene difluoride membrane.
65. The method according to any one of items 62 to 64, wherein the molecules are nucleic acid molecules such as DNA molecules or RNA molecules and the membrane is suitable for performing a Northern blot or a Southern blot, such as a nitrocellulose membrane, a polyvinylidene difluoride membrane, a filter paper membrane or a nylon membrane.
66. The method according to any one of items 62 to 65, wherein at least the lateral sides of the inner cavity and/or the frame cavity are covered with a peelable, removable, cuttable or pierceable sheet, and wherein the method comprises the step of peeling, removing, cutting or rupturing the sheet prior to contacting the separation matrix with the electroblotting membrane.
67. The method according to any one of items 62 to 66, further comprising the step of placing an electroblotting membrane on one lateral side of the separation matrix, placing a first electrode plate on the other lateral side of the separation matrix, thereby covering at least a portion of said lateral side of the separation matrix, and placing a second electrode plate on the other side of the electroblotting membrane, thereby covering at least a portion of said lateral side of the electroblotting membrane, wherein the first electrode plate and the second electrode plate have opposite charges, and wherein the second electrode plate has a charge opposite to the charge of the molecules of interest to be transferred, thereby generating an electrical field in a direction essentially perpendicular to the direction of the separation matrix and of the electroblotting membrane, thereby enabling transfer of the molecules of interest from the separation matrix to the electroblotting membrane.
68. The method according to item 67, further comprising a step of analysing the membrane.
69. The method according to item 68, wherein the step of analysing the membrane comprises one or more of: detection of the presence of the molecules of interest, lack of detection of the presence of the molecules of interest, quantification of the amount of the molecules of interest, for example by Western blot, Southern blot or Northern blot.
70. Use of the electrophoresis assembly according to any one of items 1 to 31 in a method for performing electrophoresis according to any one of items 33 to 61 or in a method for performing electroblotting according to any one of items 62 to 67.

## Claims

1. An electrophoresis assembly (1), comprising two or more frames (2), each frame having an opening (18) in an upper end and each frame being configured for holding at least one inner frame (3),
wherein the inner frame is configured for holding at least one separation matrix such as a gel (4), and wherein the inner frame comprises:
- an inner chamber (5) configured for receiving the separation matrix, said inner chamber being defined by lateral walls allowing optical access to the inner part of the inner chamber, by an upper wall (27) in an upper end of the inner chamber, and by a lower wall (39) and optionally a supporting layer (11) resting on said lower wall,
- a buffer chamber (6) configured for receiving a buffer solution, said buffer chamber comprising at least an upper compartment (7) located at an upper end of the inner chamber and a lower compartment (8) located at a lower end of the inner chamber, and optionally further comprising a lateral compartment (9) in fluid communication with the upper compartment and the lower compartment,
- an upper wall (26) comprising a second plurality of openings (13, 13'),
- a lower wall (34) comprising a third plurality of openings (31, 31'),
- a set of electrodes consisting of one or more first electrodes (29) and one or more second electrodes (29') and optionally one or more third electrodes (29"), or means to connect (28) to a set of electrodes consisting of one or more first electrodes and one or more second electrodes;
wherein the upper wall (27) of the inner chamber comprises a first plurality of openings (10, 10') being defined by a lateral wall which protrudes in the upper compartment and optionally in the inner chamber, and wherein:
a) each frame comprises a hinge or an internal slidable connection, wherein the two or more frames are pivotably hinged to one another via said hinge or wherein the two or more frames are connected to one another via said internal slidable connection, and/or
b) the assembly comprises an external slidable connection (16), wherein the two or more frames are releasably connected to one another via said external slidable connection,
such that in a first configuration the two or more frames abut each other in a longitudinal direction, and in a second configuration the two or more frames do not abut each other in a longitudinal direction while still connected to one another via said hinge or internal slidable connection or via said external slidable connection,
and wherein said first and second plurality of openings are arranged to match each other and to match an SBS format and/or an SLAS standard at least when the assembly is in the first configuration.

2. The assembly according to any one of the preceding claims, wherein the standard SBS format and/or the SLAS standard is a 6-well format, a 12-well format, a 24-well format, a 48-well format, a 96-well format, a 384-well format, a 1536-well format, a 3456-well format or a 9600-well format.

3. The assembly according to any one of the preceding claims, wherein the inner frame further comprises a pierceable, fluid-tight bottom layer (12) in its lower end, and/or wherein a first plurality of first piercing elements (17, 17') is provided in the lower part of the frame, each of said first piercing elements being configured to penetrate the supporting layer and optionally the pierceable, fluid-tight bottom layer when the inner frame is inserted in the frame, so that the first piercing elements are partially or completely inserted in the lower compartment and optionally so that the first piercing elements are partially or completely inserted in the inner chamber through the third plurality of openings, optionally wherein the first plurality of first piercing elements comprises or consists of the one or more first electrodes, or wherein the first plurality of first piercing elements is in electrical connection with the one or more first electrodes.

4. The assembly according to any one of the preceding claims, wherein a second plurality of second piercing elements (19, 19') is provided in the upper part of the frame, each of said second piercing elements being configured to be partially inserted in the first plurality of openings,
preferably wherein the inner frame comprises a pierceable seal (14) covering the second plurality of openings, optionally wherein each of said second piercing elements is configured to penetrate the pierceable seal,
and/or preferably wherein each of said second piercing elements is configured to allow introduction of a liquid composition therein, whereby the liquid composition can be introduced in the first plurality of openings, wherein each of said second piercing elements preferably comprises a loading channel (20, 20').

5. The assembly according to any one of claims 3 to 4, wherein the first piercing elements and/or the second piercing elements further comprise outer channels (23, 23', 23", 23'") which extend outside the frame when in contact with the frame, wherein said outer channels are in fluid communication with the loading channels,
and/or wherein the second piercing elements comprises or consists of the one or more second electrodes,
and/or wherein the second plurality of second piercing elements is in electrical connection with the one or more second electrodes,
wherein the outer channels of the first piercing elements and/or of the second piercing elements preferably comprise or consist of one or more third electrodes, or wherein the outer channels preferably are in electrical connection with one or more third electrodes.

6. A method for performing electrophoresis, comprising the steps of:
i) providing an electrophoresis assembly (1), comprising two or more frames (2), each frame having an opening (18) in an upper end and each frame being configured for holding at least one inner frame (3),
wherein the inner frame is configured for holding at least one separation matrix such as a gel (4), and wherein the inner frame comprises:
- an inner chamber (5) configured for receiving the separation matrix, said inner chamber being defined by lateral walls allowing optical access to the inner part of the inner chamber, by an upper wall (27) in an upper end of the inner chamber, and by a lower wall (39) and optionally a supporting layer (11) resting on said lower wall,
- a buffer chamber (6) configured for receiving a buffer solution, said buffer chamber comprising at least an upper compartment (7) located at an upper end of the inner chamber and a lower compartment (8) located at a lower end of the inner chamber, and optionally further comprising a lateral compartment (9) in fluid communication with the upper compartment and the lower compartment,
- an upper wall (26) comprising a second plurality of openings (13, 13'),
- a lower wall (34) comprising a third plurality of openings (31, 31'),
- a set of electrodes consisting of one or more first electrodes (29) and one or more second electrodes (29') and optionally one or more third electrodes (29"), or means to connect (28) to a set of electrodes consisting of one or more first electrodes and one or more second electrodes;
wherein the upper wall (27) of the inner chamber comprises a first plurality of openings (10, 10') being defined by a lateral wall which protrudes in the upper compartment and optionally in the inner chamber, and wherein:
c) each frame comprises a hinge or an internal slidable connection, wherein the two or more frames are pivotably hinged to one another via said hinge or wherein the two or more frames are connected to one another via said internal slidable connection, and/or
d) the assembly comprises a external slidable connection (16), wherein the two or more frames are releasably connected to one another via said external slidable connection,
such that in a first configuration the two or more frames abut each other in a longitudinal direction, and in a second configuration the two or more frames do not abut each other in a longitudinal direction while still connected to one another via said hinge or internal slidable connection or via said external slidable connection,
and wherein said first and second plurality of openings are arranged to match each other and to match an SBS format and/or an SLAS standard at least when the assembly is in the first configuration,
wherein at least one separation matrix is inserted in the inner frames, and
wherein a buffer solution is introduced in the buffer chamber,
ii) arranging the electrophoresis assembly in a first configuration wherein the two or more frames abut each other in a longitudinal direction;
iii) loading a first plurality of samples comprising molecules of interest into the first plurality of openings;
iv) optionally, applying a current between the one or more first electrodes and the one or more second electrodes for a duration sufficient to allow the samples of molecules to enter the separation matrix, and further optionally loading a second plurality of samples comprising molecules of interest into the third plurality of openings;
v) applying a current between the one or more first electrodes and the one or more second electrodes, whereby migration of the samples through the separation matrix is enabled;
vi) arranging the electrophoresis assembly in a second configuration wherein the two or more frames no longer abut each other in a longitudinal direction, so as to enable optical access to the separation matrix from a lateral side of the frame; and
vii) monitoring migration of the samples through the separation matrix via optical detection means (40);
wherein steps iii) to vi) can be performed in any order,
preferably wherein the electrophoresis assembly is according to any one of the preceding claims.

7. The method according to claim 6, wherein the step of loading the samples comprising molecules of interest into the first plurality of openings is performed as follows:
a) providing a first sample reservoir (24) comprising wells (25, 25') and matching an SBS format and/or an SLAS standard, said wells comprising the samples in solution, said samples comprising the molecules of interest, said molecules of interest having a positive charge or a negative charge;
b) arranging the electrophoresis assembly such that the outer channels of the first piercing elements are contacted with the samples;
c) generating a first electrical field in the sample solution by applying a current having a charge opposite to the charge of the molecules of interest to the one or more second electrodes for a duration sufficient to allow at least a portion of the molecules of interest to migrate to the one or more second electrodes and into the separation matrix,
preferably wherein the sample solution comprises cells comprising or suspected of comprising the molecules of interest, and wherein step c) further comprises a step of applying one or more electric pulses to the first piercing elements, thereby lysing the cells and releasing the molecules of interest from the cells.

8. The method according to claim 7, further comprising step iv) of loading a second plurality of samples comprising molecules of interest into the third plurality of openings.

9. The method according to claim 8, wherein step iv) is performed as follows:
A. providing a second sample reservoir comprising wells and matching an SBS format and/or an SLAS standard, said wells comprising the second plurality of samples in solution, said samples comprising the molecules of interest, said molecules of interest having a positive charge or a negative charge;
B. arranging the electrophoresis assembly such that the outer channels of the second piercing elements are contacted with the second plurality of samples;
C. generating a first electrical field in the sample solution by applying a current having a charge opposite to the charge of the molecules of interest of the second plurality of samples to the one or more second electrodes for a duration sufficient to allow at least a portion of the molecules of interest to migrate to the one or more second electrodes and into the separation matrix.

10. The method according to any one of claims 6 to 9, further comprising a step viii) of extracting the molecules of interest from the separation matrix.

11. The method according to any one of claims 6 to 10, wherein the method further comprises the step of cutting one or more pieces of the separation matrix suspected of containing the molecules of interest with cutting means, preferably wherein the cutting means is a squared-end tip, a rectangular-end tip or a circular-end tip such as a pipette tip.

12. The method according to any one of claims 6 to 11, optionally wherein the electrophoresis assembly further comprises a conductive sheet covering at least a portion of the separation matrix comprising molecules of interest, wherein the cutting means are made of a conductive material, and wherein the method further comprises the step of applying a current to the cutting means, having a charge opposite the charge of the molecules of interest, and to the conductive sheet, having a charge of the same sign as the charge of the molecules of interest, preferably wherein said current is applied after step vii).

13. The method according to any one of claims 10 to 12, further comprising the step of recovering the molecules of interest from the one or more pieces of the separation matrix.

14. A method for performing electroblotting, comprising the steps of:
i) performing the method of electrophoresis according to any one of claims 6 to 13,
ii) contacting the separation matrix (4) comprising molecules of interest with an electroblotting membrane, and
iii) transferring the molecules of interest from the separation matrix to the electroblotting membrane by applying an electrical field having a direction perpendicular to the direction of the separation matrix and of the electroblotting membrane,
optionally further comprising, after step i) or during step ii), the step of placing an electroblotting membrane on one lateral side of the separation matrix, placing a first electrode plate on the other lateral side of the separation matrix, thereby covering at least a portion of said lateral side of the separation matrix, and placing a second electrode plate on the other side of the electroblotting membrane, thereby covering at least a portion of said lateral side of the electroblotting membrane, wherein the first electrode plate and the second electrode plate have opposite charges, and wherein the second electrode plate has a charge opposite to the charge of the molecules of interest to be transferred, thereby generating an electrical field in a direction essentially perpendicular to the direction of the separation matrix and of the electroblotting membrane, thereby enabling transfer of the molecules of interest from the separation matrix to the electroblotting membrane.

15. Use of the electrophoresis assembly according to any one of claims 1 to 5 in a method for performing electrophoresis according to any one of claims 6 to 13 or in a method for performing electroblotting according to claim 14.
